# EUROPÄISCHE PATENTSCHRIFT

(11) **EP 0 756 099 B1**
(45) Veröffentlichungstag und Bekanntmachung des Hinweises auf die Patenterteilung: **24.01.2001**
(21) Anmeldenummer: 96111884.1
(22) Anmeldetag: 24.07.1996
(51) Int. Cl.: F16D 43/206, F16D 43/202

(54) **Kupplung**
Clutch
Embrayage

(30) Priorität: 27.07.1995 DE 19527411
(43) Veröffentlichungstag der Anmeldung: 29.01.1997
(73) Patentinhaber: Flex-Elektrowerkzeuge GmbH, 71711 Steinheim (DE)
(72) Erfinder: Lepold, Holger, 71711 Steinheim (DE)
(74) Vertreter: Hoeger, Stellrecht & Partner

(56) Entgegenhaltungen:
- DE-A- 3 700 730
- GB-A- 2 194 299
- GB-A- 2 275 745
- US-A- 3 472 347
- US-A- 3 774 738
- US-A- 3 930 422
- US-A- 4 220 230

## Beschreibung

Die Erfindung betrifft eine Kupplung, insbesondere für motorisch angetriebene Werkzeugmaschinen, welche beim Auftreten eines bestimmten Auslösedrehmoments lösbar ist, umfassend ein um eine Drehachse drehbares Kupplungselement mit mindestens einem ersten Rastelement, und ein weiteres um die Drehachse drehbares Kupplungselement mit mindestens einem zweiten Rastelement, wobei in einer eingekuppelten Stellung die Rastelemente relativ zueinander und bezogen auf die Drehachse in einer definierten Kupplungsdrehstellung ausgerichtet sind und in einer wirksamen, ineinandergreifenden Stellung stehen und wobei in einer ausgekuppelten Stellung die Rastelemente in einer unwirksamen Stellung außer Eingriff stehen, einen elastischen Kraftspeicher, welcher in der eingekuppelten Stellung auf die Rastelemente im Sinne einer Aufrechterhaltung der eingekuppelten Stellung wirkt, ein Halteelement, welches nach Auftreten des Auslösedrehmoments von einer inaktiven Stellung in eine aktive Stellung bewegbar ist.

Derartige Kupplungen sind für motorisch angetriebene Werkzeugmaschinen bekannt. Diese dienen vorwiegend als Sicherheitskupplung, um bei einem Blockieren des Werkzeugs ein weiteres Antreiben und somit einen Bruch desselben oder ein Lösen der Werkzeugmaschine von ihrer Befestigung zu verhindern.

Vorzugsweise werden derartige Kupplungen bei Werkzeugmaschinen zum Antrieb von Bohrwerkzeugen, insbesondere Bohrkronen, eingesetzt.

Bei der Kupplung gemäß der GB-A-2 194 299, die den Oberbegriff des Anspruchs 1 offenbart, sind die Rastkörper, die mit den beiden Kupplungselementen zusammenwirken, so angeordnet, daß sie in der Kupplungsdrehstellung in die Ausnehmungen eingreifen. Sobald jedoch das Grenzdrehmoment überschritten wird, bewegen sich die Rastkörper von den Ausnehmungen in die Ausnehmungen, welche, wie auf Seite 3, Zeilen 31 ff beschrieben, Aufnahmen darstellen, die geringfügig tiefer und breiter als die Ausnehmungen ausgebildet sind, um einen Rollkontakt mit dem Kupplungselement zu vermeiden.

Das heißt, daß dann, wenn das Grenzdrehmoment überschritten ist, die Kugeln von den Ausnehmungen in die Ausnehmungen übergehen und in diesen dann verbleiben, so lange die ausgekuppelte Stellung aufrecht erhalten bleibt, wobei in diesem Fall das Kupplungselement direkt durch die Kugeln, die auf dem Führungselement aufsitzen, im Abstand von dem Kupplungselement gehalten wird, wobei die Kugel dann mit dem Kupplungselement mitlaufen und eine Abstützung über das Drehlager erfolgt.

Der Erfindung liegt daher die Aufgabe zugrunde, eine Kupplung der gattungsgemäßen Art derart zu verbessern, daß diese möglichst einfach und betriebssicher aufgebaut ist.

Diese Aufgabe wird bei einer Kupplung der eingangs beschriebenen Art erfindungsgemäß dadurch gelöst, daß in der aktiven Stellung des Halteelements die Rastelemente bei angetriebener Kupplung in die Kupplungsdrehstellung hinein und aus dieser herauslaufen, daß das Halteelement in der aktiven Stellung in jeder Kupplungsdrehstellung einen durch Einwirkung des elastischen Kraftspeichers ausgelösten Übergang der Rastelemente von der unwirksamen Stellung in die wirksame Stellung verhindert und daß das Halteelement in der inaktiven Stellung in jeder Kupplungsdrehstellung einen durch den elastischen Kraftspeicher ausgelösten Übergang der Rastelemente von der unwirksamen Stellung in die wirksame Stellung zuläßt.

Unter einer Kupplungsdrehstellung im Sinne der erfindungsgemäßen Lösung sind insbesondere alle Drehstellungen der Kupplungselemente relativ zueinander zu verstehen, in welchen die Rastelemente die Möglichkeit haben, ineinanderzugreifen und aufgrund ihrer Form, z.B. bei Wirkung des elastischen Kraftspeichers, selbständig in die eingekuppelte Stellung überzugehen.

Der Vorteil der erfindungsgemäßen Lösung ist darin zu sehen, daß bei einmaligem Erreichen des Auslösedrehmoments das Halteelement in seiner aktiven Stellung einen Übergang der Rastelemente von der unwirksamen Stellung in die wirksame Stellung verhindert und somit das "Schlagen" der Kupplung nicht mehr auftritt und folglich auch das Auslösedrehmoment nur einmalig auftritt und dann nicht mehr aufgebracht werden muß, so daß sowohl die Kupplung als auch die Werkzeugmaschine und das Werkzeug weniger verschleißbeansprucht sind.

Insbesondere sind bei der erfindungsgemäßen Lösung die Rastelemente an den jeweiligen zugeordneten Kupplungselementen so angeordnet, daß diese in allen Stellungen derselben der Drehbewegung des jeweiligen Kupplungselements folgen. Das heißt, die Rastelemente sind beispielsweise entweder fest mit dem jeweiligen Kupplungselement verbunden oder das jeweilige Kupplungselement bildet eine Aufnahme oder ein Käfig, so daß das Rastelement vom Kupplungselement bei einer Drehung um die Drehachse mitgenommen wird.

Damit die erfindungsgemäße Kupplung als Sicherheitskupplung wirkt, ist es besonders vorteilhaft, wenn das Halteelement nach Auftreten des Auslösedrehmoments so lange beim jeweiligen Erreichen der Kupplungsdrehstellung einen Übergang der Rastelemente von der unwirksamen Stellung in die wirksame Stellung verhindert, so lange die Kupplung antriebsseitig angetrieben ist. Damit ist sichergestellt, daß die Kupplung bis zum Abschalten des Antriebs in der ausgekuppelten Stellung verbleibt und die unerwünschten hohen Auslösedrehmomente nicht mehrfach auftreten.

Hinsichtlich der Art der Überführung des Halteelements von der inaktiven in die aktive Stellung sind die unterschiedlichsten Möglichkeiten denkbar. Eine besonders vorteilhafte Möglichkeit sieht vor, daß das Halteelement durch eine relative Drehbewegung zwischen den Kupplungselementen in der ausgekuppelten Stellung von der inaktiven in die aktive Stellung bringbar ist. Der Vorteil dieser Lösung ist darin zu sehen, daß diese die ohnehin auftretende Relativbewegung zwischen den Kupplungselementen ausnutzt, um damit das Halteelement von der inaktiven in die aktive Stellung zu überführen.

Beispielsweise wäre es dabei möglich, dem Halteelement lediglich eine lineare Bewegung zu vermitteln. Besonders zweckmäßig ist jedoch eine Lösung, bei welcher das Halteelement durch eine Drehbewegung relativ zu mindestens einem der Kupplungselemente von der inaktiven in die aktive Stellung bringbar ist.

Das Überführen des Halteelements von der inaktiven Stellung in die aktive Stellung läßt sich jedoch besonders einfach und sicher dann realisieren, wenn das Halteelement durch eine relative Drehbewegung gegenüber beiden Kupplungselementen von der inaktiven Stellung in die aktive Stellung bringbar ist.

Hinsichtlich der Wirkung des Halteelements zur Verhinderung des Übergangs von Rastkörper und Rastkörperaufnahme von der unwirksamen in die wirksame Stellung in der Kupplungsdrehstellung sind unterschiedlichste Möglichkeiten denkbar. So sieht eine vorteilhafte Lösung vor, daß das Halteelement eine Bewegung der Rastelemente von der unwirksamen Stellung in die wirksame Stellung blockiert, das heißt, dabei entweder auf das jeweilige Rastelement oder das dieses Rastelement umfassende Kupplungselement einwirkt. Diese Lösung hat den Vorteil, daß damit sichergestellt ist, daß die Rastelemente in ihrer unwirksamen Stellung bleiben.

Eine andere Alternative sieht vor, daß das Halteelement eine Wirkung des elastischen Kraftspeichers auf die Rastelemente im Sinne einer Bewegung derselben von der unwirksamen Stellung in die wirksame Stellung unterbindet, so daß zwar die Rastelemente die Möglichkeit haben, in Eingriff zu kommen, allerdings nicht unter Einwirkung des elastischen Kraftspeichers, und somit - sollte dies der Fall sein - ohne großes Drehmoment sofort wieder außer Eingriff bringbar sind. Der Vorteil dieser Lösung ist darin zu sehen, daß keine direkte Einwirkung auf die Rastelemente erforderlich ist, sondern nur eine konstruktiv einfach zu lösende Einwirkung auf den elastischen Kraftspeicher oder die zwischen diesem und den Kupplungs- oder Rastelementen angeordneten Übertragungselementen erforderlich ist.

Das Halteelement könnte prinzipiell in unterschiedlichster Art und Weise wirksam sein. Es wäre beispielsweise denkbar, daß sich das Halteelement an einem Gehäuse der Kupplung abstützt. Besonders vorteilhaft ist es jedoch, wenn das Halteelement sich in der aktiven Stellung an einem der Kupplungselemente, beispielsweise einem zweiten Kupplungselement, abstützt. Diese Lösung hat den großen Vorteil, daß das Halteelement so ausgebildet werden kann, daß es in seiner aktiven Stellung unmittelbar mit dem zweiten Kupplungselement zusammenwirkt, so daß die erfindungsgemäße Kupplung konstruktiv besonders klein gebaut werden kann.

Vorzugsweise stützt sich das Halteelement auf einer diesem direkt zugewandten Seite des zweiten Kupplungselement ab.

Dabei ist es besonders zweckmäßig, wenn das Halteelement relativ zu dem dieses in der aktiven Stellung abstützenden zweiten Kupplungselement um die Drehachse unbegrenzt drehbar ist. Dies eröffnet die Möglichkeit, bei gelöster Stellung der Kupplung das Halteelement gegenüber dem zweiten Kupplungselement rotieren zu lassen.

Besonders zweckmäßig ist ein Ausführungsbeispiel, bei welchem das Halteelement in der aktiven Stellung gemeinsam mit einem ersten Kupplungselement relativ zu dem zweiten Kupplungselement unbegrenzt drehbar ist, so daß damit das Halteelement in der ausgekuppelten Stellung mit dem ersten Kupplungselement unbegrenzt mitgedreht werden kann.

Besonders zweckmäßig ist es dabei, wenn das Halteelement gegenüber dem ersten der Kupplungselemente von einer definierten inaktiven Drehstellung in eine definierte aktive Drehstellung begrenzt drehbar ist, so daß beide Drehstellungen in einfacher Weise definiert festlegbar sind.

Um vorzugsweise sicherzustellen, daß das Halteelement in seiner inaktiven Drehstellung relativ zum ersten Kupplungselement die Möglichkeit hat, in seine inaktive Stellung überzugehen, sind das Halteelement und das zweite Kupplungselement so ausgebildet, daß in mindestens einer definierten Ausgangsdrehstellung der beiden relativ zueinander das Halteelement in die inaktive Stellung überführbar ist.

Unter der Ausgangsdrehstellung des Halteelements sind alle Drehstellungen des Halteelements relativ zum zweiten Kupplungselement zu verstehen, in welchen das Halteelement die Möglichkeit hat, z.B. bei Einwirken des elastischen Kraftspeichers, in die inaktive Stellung überzugehen.

Eine derartige erfindungsgemäße Kupplung ist vorzugsweise so ausgebildet, daß in der eingekuppelten Stellung das Halteelement relativ zum zweiten Kupplungselement in der Ausgangsdrehstellung und gleichzeitig die Rastelemente relativ zueinander in der Kupplungsdrehstellung stehen und in dieser der Kraftspeicher die Rastelemente in der wirksamen Stellung hält.

Zweckmäßigerweise ist ferner dieses Ausführungsbeispiel so ausgebildet, daß bei relativ zum ersten Kupplungselement in aktiver Drehstellung stehendem Halteelement entweder bei relativ zum zweiten Kupplungselement in Ausgangsdrehstellung stehendem Halteelement die Rastelemente außerhalb ihrer Kupplungsdrehstellung stehen und in ihrer unwirksamen Stellung verbleiben oder bei in Kupplungsdrehstellung stehenden Rastelementen das Halteelement gegenüber dem zweiten Kupplungselement außerhalb der Ausgangsstellung und in seiner aktiven Stellung steht.

Bei diesem Ausführungsbeispiel drehen sich in der ausgekuppelten Stellung das erste Kupplungselement und das zweite Kupplungselement relativ zueinander um die Drehachse und das Halteelement dreht sich mit dem ersten Kupplungselement wobei bei dieser Drehbewegung einmal das Halteelement die Ausgangsdrehstellung erreicht und ein andermal die Rastelemente die Kupplungsdrehstellungen erreichen, die Ausgangsdrehstellung und die Kupplungsdrehstellung jedoch nie gleichzeitig erreicht werden, so daß die ausgekuppelte Stellung erhalten bleibt.

Um bei einem derartig ausgebildeten Ausführungsbeispiel der erfindungsgemäßen Kupplung in der ausgekuppelten Stellung die unwirksame Stellung der Rastelemente ständig aufrecht zu erhalten, ist bei einer bevorzugten Alternative vorgesehen, daß die Kupplungselemente so ausgebildet sind, daß diese außerhalb der Kupplungsdrehstellung der Rastelemente in ihrer unwirksamen Stellung gehalten werden. Damit ist es lediglich erforderlich, daß das Halteelement bei Erreichen der Kupplungsdrehstellung seine aktive Stellung erreicht und in dieser verhindert, daß die Rastelemente in ihre wirksame Stellung übergehen.

Bei einer zweiten alternativen oder die vorstehende Lösung ergänzenden Lösung ist vorgesehen, daß das Halteelement und das zweite Kupplungselement so ausgebildet sind, daß diese in allen Stellungen außerhalb der Ausgangsdrehstellung das Halteelement in seiner aktiven Stellung halten und somit einen Übergang der Rastelemente von der unwirksamen in die wirksame Stellung verhindern, so daß lediglich bei Erreichen der Ausgangsdrehstellung des Halteelements relativ zu dem zweiten Kupplungselement die Notwendigkeit besteht, daß die Kupplungselemente so ausgebildet sind, daß in dieser Ausgangsdrehstellung die Rastelemente nicht von ihrer unwirksamen in ihre wirksame Stellung übergehen.

Es ist aber auch möglich, beide Alternativen zu einer kombinierten Lösung zu vereinigen.

Im Zusammenhang mit der bisherigen Beschreibung der einzelnen Ausführungsbeispiele wurde hinsichtlich der Bewegung des Halteelements von der inaktiven in die aktive Stellung keine näheren Angaben gemacht. So sieht ein vorteilhaftes Ausführungsbeispiel vor, daß zum Bewegen des Halteelements von der inaktiven in die aktive Stellung zusammenwirkende Stellelemente vorgesehen sind.

Die Stellelemente können in unterschiedlichster Art und Weise ausgebildet sein. Vorzugsweise ist vorgesehen, daß mindestens eines der Stellelemente eine Schrägfläche aufweist, gegenüber welcher das andere Stellelement bewegbar ist, wobei die Schrägfläche quer zu einer Stellrichtung der Stelleinrichtung verläuft.

Vorzugsweise sind als Stellelemente ein Stellnocken und ein Stellnockengegenlager vorgesehen, wobei zweckmäßigerweise eines von beiden am Halteelement und das andere an dem zweiten Kupplungselement angeordnet ist.

Um die Stellelemente insbesondere bei dem Ausführungsbeispiel einzusetzen, bei welchem ein Übergang von der aktiven Stellung in die inaktive Stellung durch eine Drehbewegung des Halteelements erfolgt, ist vorzugsweise vorgesehen, daß die Stellelemente bei einer Drehbewegung des Halteelements dieses in der Stellrichtung verschieben.

Ein besonders vorteilhaftes Ausführungsbeispiel sieht vor, daß an dem zweiten Kupplungselement eines der Rastelemente in einem ersten Rasterbild und eines der Stellelemente in einem zweiten Rasterbild angeordnet sind, welches relativ zum ersten Rasterbild in einer definierten Relativstellung ausgerichtet ist, daß das andere Rastelement an dem ersten Kupplungselement in dem ersten Rasterbild angeordnet und das andere der Stellelemente an dem Halteelement in dem zweiten Rasterbild angeordnet sind, daß in der inaktiven Drehstellung des Halteelements das zweite Rasterbild des Halteelements zum ersten Rasterbild des ersten Kupplungselement in der definierten Relativdrehstellung steht wie beim zweiten Kupplungselement und daß in der aktiven Drehstellung des Halteelements das zweite Rasterbild des Halteelements gegenüber dem ersten Rasterbild des ersten Kupplungselements aus der definierten Relativdrehstellung herausgedreht ist.

Besonders günstige Lösungen, insbesondere um symmetrische Belastungen der Kupplungselemente zu erreichen, sehen vor, daß mehrere Paare von Rastelementen zwischen den Kupplungselementen wirksam sind. Vorzugsweise sind diese Paare identisch ausgebildet und axialsymmetrisch zu einer Drehachse der Kupplungselemente angeordnet, so daß dadurch noch zusätzlich die Möglichkeit besteht, eine Kupplungsdrehstellung bei weniger als einer Umdrehung der Kupplungselemente relativ zueinander zu erreichen.

Ferner sieht ein weiteres vorteilhaftes Ausführungsbeispiel vor, daß zwischen dem Halteelement und dem zweiten Kupplungselement mehrere Paare von Stellelementen wirksam sind, um ebenfalls eine möglichst gleichmäßige Belastung derselben zu erreichen.

Vorzugsweise sind auch die Paare von Stellelementen identisch ausgebildet und in einem axialsymmetrischen Muster zur Drehachse angeordnet, wobei zweckmäßigerweise die Axialsymmetrie dieselbe wie bei den Rastelementen ist, so daß die Möglichkeit gegeben ist, bei in inaktiver Drehstellung stehendem Halteelement und weniger als einer Umdrehung des Halteelements relativ zum zweiten Kupplungselement eine eingekuppelte Stellung der Kupplung zu erreichen.

Eine besonders kompakte Bauweise der erfindungsgemäßen Kupplung ist dann möglich, wenn die Kupplungselemente einander gegenüberliegend angeordnet sind. Diese Lösung läßt sich noch kompakter ausführen, wenn das zweite Kupplungselement und das Halteelement ebenfalls einander gegenüber liegen.

Hinsichtlich der Möglichkeiten der Überführung des Halteelements von der inaktiven in die aktive Stellung wurden im Zusammenhang mit der bisherigen Erläuterung der einzelnen Ausführungsbeispiele keine näheren Angaben gemacht. So wäre es prinzipiell vorstellbar, das Halteelement mit einem elastischen Kraftspeicher ständig zu beaufschlagen, welcher dieses - wenn möglich - von der aktiven Stellung in die inaktive Stellung überführt.

Konstruktiv besonders vorteilhaft ist es jedoch, wenn in der Ausgangsdrehstellung das Halteelement von dem auf die Rastelemente wirkenden elastischen Kraftspeicher in die inaktive Stellung überführbar ist.

Diese Lösung läßt sich konstruktiv noch dadurch vorteilhaft weiterentwickeln, daß das Halteelement erst dann von seiner inaktiven Stellung in die aktive Stellung überführbar ist, wenn die Rastelemente in ihrer unwirksamen Stellung stehen, so daß das Halteelement keinen Beitrag zum Erreichen der unwirksamen Stellung der Rastelemente leisten muß.

Weiter läßt sich diese Lösung noch dadurch vorteilhaft weiterbilden, daß das Halteelement bei in der unwirksamen Stellung stehenden Rastelementen von der inaktiven Stellung in die aktive Stellung frei beweglich ist, so daß keinerlei nennenswertes Drehmoment zum Erreichen der aktiven Stellung des Halteelements erforderlich ist.

Besonders günstig ist dies dann lösbar, wenn die in unwirksame Stellung stehenden Rastelemente beim Übergang des Halteelements von der inaktiven in die aktive Stellung die Wirkung des elastischen Kraftspeichers auf das Halteelement verhindern.

Hinsichtlich der Ausbildung der Rastelemente selbst wurden im Zusammenhang mit der bisherigen Beschreibung der einzelnen Ausführungsbeispiele der erfindungsgemäßen Kupplung keine näheren Angaben gemacht.

So sieht ein besonders einfaches ausgebildetes Ausführungsbeispiel vor, daß eines der Rastelemente als Rastnocken ausgebildet ist, wobei dieser Nocken fest mit dem entsprechenden Kupplungselement verbunden ist. Ein derartiger Nocken läßt sich besonders einfach an ein Kupplungselement anformen, wobei im einfachsten Fall der Nocken einstückig an das Kupplungselement angeformt ist.

Noch vorteilhafter, jedoch aufwendiger, ist eine Lösung, bei welcher eines der Rastelemente als Wälzkörper ausgebildet ist, so daß in der Stellung, in welcher das Rastelement der Kraft des elastischen Kraftspeichers entgegenwirken muß, der Wälzkörper sich auf einer entsprechenden Gegenfläche abwälzen kann und - im Gegensatz zu einem festen Rastnocken - keine Gleitreibung zwischen den Kupplungselementen auftritt, sondern Rollreibung und somit in der ausgekuppelten Stellung im wesentlichen kein Gegendrehmoment wirkt.

Ein derartiger Wälzkörper könnte im einfachsten Fall so ausgebildet sein, daß er in dem diesem zugeordneten Kupplungselement, beispielsweise in einer entsprechenden, den Wälzkörper teilweise umfassenden Ausnehmung, gelagert ist.

Bei dem vorstehend genannten Ausführungsbeispiel würde vorzugsweise der elastische Kraftspeicher auf das den Wälzkörper lagernde Kupplungselement, beispielsweise eine entsprechende Anlagefläche desselben, wirken.

Noch vorteilhafter ist es jedoch, wenn die Wälzkörper das jeweilige Kupplungselement durchgreifen und auf ihrer dem anderen Kupplungselement gegenüberliegenden Seite direkt durch den elastischen Kraftspeicher beaufschlagt sind, so daß der elastische Kraftspeicher nicht auf das Kupplungselement selbst, sondern lediglich direkt auf die Wälzkörper wirkt.

Um ferner die Möglichkeit zu schaffen, daß sich die Wälzkörper auf dem jeweils anderen Kupplungselement abwälzen können, ist vorzugsweise vorgesehen, daß der elastische Kraftspeicher mittels einer um die Drehachse drehbaren Druckscheibe auf die Wälzkörper wirkt, wobei diese Druckscheibe vorzugsweise durch ein Axiallager drehbar gelagert ist. Diese Lösung hat den großen Vorteil, daß die Wälzkörper sich einerseits auf dem jeweils anderen Kupplungselement und andererseits an der Druckscheibe abwälzen können und somit zwischen dem anderen Kupplungselement und der Druckscheibe eine Art Wälzlager entsteht.

Vorzugsweise umfaßt der elastische Kraftspeicher ein elastisches Kraftspeicherpaket, die Druckscheibe und ein zwischen beiden wirksames Axiallager.

Hinsichtlich der Ausbildung der mit den Rastnocken oder Wälzkörpern als eines der Stellelemente jeweils zusammenwirkenden anderen Stellelemente wurden bislang keine näheren Angaben gemacht. So sieht ein vorteilhaftes Ausführungsbeispiel vor daß das andere Stellelement zwei quer zur Drehrichtung verlaufende Wandflächen aufweist, zwischen welchen der Rastnocken oder der Wälzkörper in seiner wirksamen Stellung eingreift.

Diese Wandflächen sind beispielsweise die Wandflächen von Vertiefungen oder auch beispielsweise Nuten, wobei die Nuten vorzugsweise in radialer Richtung zur Drehachse verlaufend angeordnet sind.

Besonders zweckmäßig ist es, insbesondere um ein definiertes Auslösedrehmoment mit guter Reproduzierbarkeit festlegen zu können, wenn die Wandflächen des anderen Rastelements zusammen mit dem Rastnocken oder dem Wälzkörper mindestens eine schräg zur Drehrichtung verlaufende Schrägfläche bilden, durch deren Neigung das Auslösedrehmoment definierbar ist.

Hinsichtlich der Art der Ausbildung der Stellelemente wurden bislang keine weiteren detaillierten Angaben gemacht. Besonders vorteilhaft ist es, wenn die Stellelemente in gleicher Weise wie die Rastelemente ausgebildet sind, so daß bereits aus fertigungstechnischen Gründen eine einfache und kostengünstige Fertigung der erfindungsgemäßen Kupplung möglich ist.

Rein prinzipiell können die Stellelemente und die Rastelemente in unterschiedlichen Mustern relativ zur Drehachse angeordnet sein. Besonders zweckmäßig ist es jedoch, wenn die Stellelemente und die Rastelemente auf derselben Kreisbahn angeordnet und identisch ausgebildet sind, so daß die erfindungsgemäße Kupplung aufgrund der Identität von Stell- und Rastelemente besonders einfach herstellbar ist und außerdem auch die einen Rastelemente mit den jeweils anderen Stellelementen und umgekehrt in Eingriff bringbar sind. Dies erlaubt es in besonders einfacher Weise die Kupplung von der ausgekuppelten Stellung in die eingekuppelte Stellung zurückzubringen, da die einen Stellelemente mit den in Rückstellrichtung nächstliegenden anderen Stellelementen oder Rastelementen und auch die einen Rastelemente mit den in Rückstellrichtung nächstliegenden Rastelementen oder Stellelementen in Eingriff kommen können.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Figur 1: einen Längsschnitt durch ein erstes Ausführungsbeispiel einer erfindungsgemäßen Kupplung;
- Figur 2: einen Schnitt längs Linie 2-2 in Figur 1, mit in einer Kupplungsdrehstellung und einer wirksamen Stellung stehenden Rastelementen und einem in einer Ausgangsdrehstellung relativ zu einem zweiten der Kupplungselemente und in inaktiver Drehstellung relativ zu einem ersten der Kupplungselemente stehendem Halteelement;
- Figur 3: einen Schnitt in Abwälzung längs Linie 3-3 in Figur 2 bei in Kupplungsdrehstellung und wirksamer Stellung stehenden Rastelementen und dem in Ausgangsdrehstellung relativ zu dem zweiten der Kupplungselemente und in inaktiver Drehstellung relativ zu dem ersten der Kupplungselemente stehenden Halteelement;
- Figur 4: einen Schnitt längs Linie 4-4 in Figur 1;
- Figur 5: einen Schnitt ähnlich Figur 3 unmittelbar nach Übergang der Rastelemente von einer wirksamen in eine unwirksame Stellung und somit Übergang in die ausgekuppelte Stellung sowie noch in Ausgangsdrehstellung stehendem Halteelement relativ zu dem zweiten Kupplungselement;
- Figur 6: einen Schnitt ähnlich Figur 2 bei in aktiver Drehstellung stehendem Halteelement;
- Figur 7: einen Schnitt ähnlich Figur 3 bei in aktiver Drehstellung relativ zum ersten Kupplungselement stehendem Halteelement und in Ausgangsdrehstellung relativ zum zweiten Kupplungselement stehendem Halteelement;
- Figur 8: einen Schnitt ähnlich Figur 3 bei in aktiver Drehstellung stehendem Halteelement und in Kupplungsdrehstellung stehenden Rastelementen;
- Figur 9: einen Längsschnitt durch ein zweites Ausführungsbeispiel einer erfindungsgemäßen Kupplung in einer Werkzeugmaschine;
- Figur 10: einen Längsschnitt ähnlich Figur 9 durch ein drittes Ausführungsbeispiel einer erfindungsgemäßen Kupplung in einer Werkzeugmaschine;
- Figur 11: einen Schnitt entsprechend Figur 3 durch das dritte Ausführungsbeispiel;
- Figur 12: einen Schnitt längs Linie 12-12 in Figur 10 bei in inaktiver Drehstellung relativ zum ersten Kupplungselement stehendem Halteelement entsprechend Figur 2;
- Figur 13: einen Schnitt ähnlich Figur 11 unmittelbar nach einem Übergang der Kupplung in die ausgekuppelte Stellung und noch in Ausgangsdrehstellung stehendem Halteelement entsprechend Figur 5;
- Figur 14: einen Schnitt ähnlich Figur 12 bei in aktiver Drehstellung stehendem Halteelement entsprechend Figur 6;
- Figur 15: einen Schnitt ähnlich Figur 11 bei in aktiver Drehstellung zum ersten Kupplungselement stehendem Halteelement und in Ausgangsdrehstellung zum zweiten Kupplungselement stehendem Halteelement entsprechend Figur 7 und
- Figur 16: einen Schnitt ähnlich Figur 11, bei in aktiver Drehstellung zum ersten Kupplungselement stehendem Halteelement und in Kupplungsdrehstellung zueinander stehenden Rastelementen, entsprechend Figur 8.

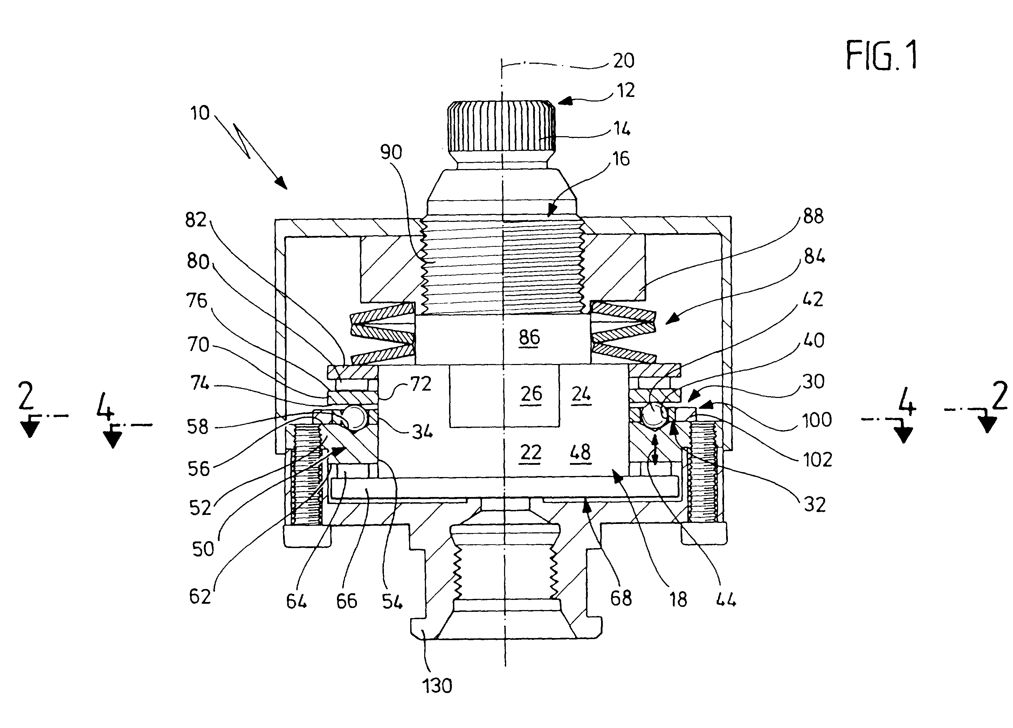

Ein erstes Ausführungsbeispiel einer als Ganzes mit 10 bezeichneten erfindungsgemäßen Kupplung, dargestellt in Fig. 1, umfaßt einen an einem ersten Ende 12, beispielsweise mittels einer Verzahnung 14 angetriebenen Wellenstummel 16, welcher an einem dem ersten Ende gegenüberliegenden Bereich einen Führungsansatz 18 mit einer zu einer Drehachse 20 des Wellenstummels 16 zylindrischen Außenmantelfläche 22 aufweist.

Die Außenmantelfläche 22 ist in einem dem ersten Ende 12 zugewandten Teilbereich 24 mit einer Abflachung 26 versehen, mit welcher ein als Ganzes mit 30 bezeichnetes erstes Kupplungselement antreibbar ist.

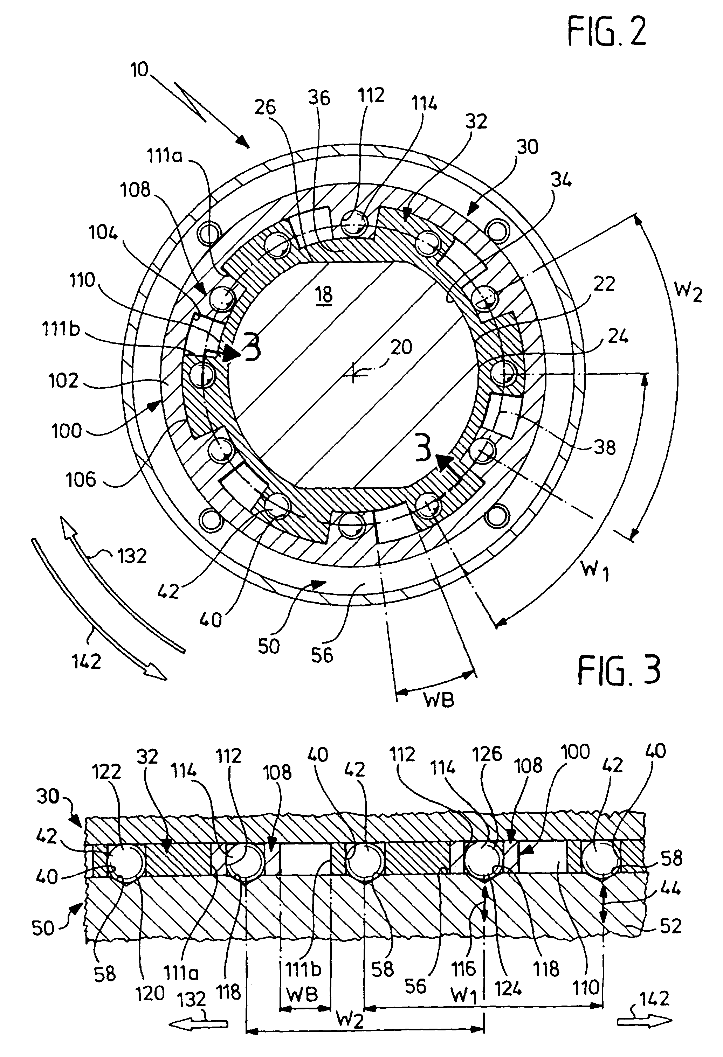

Das erste Kupplungselement 30 umfaßt, wie in Fig. 1 und 2 dargestellt, einen koaxial zur Drehachse 20 angeordneten ersten Ring 32, welcher mit einer inneren Ringfläche 34 an dem Teilbereich 24 der Außenmantelfläche 22 anliegt und mit einem Vorsprung 36 an den Abflachungen 26, so daß der Ring 32 drehfest mit dem Wellenstummel 16 verbunden ist. Der Ring 32 ist seinerseits mit einer Vielzahl in gleichen Winkelabständen W1 zur Drehachse 20 auf einer Kreislinie 38 angeordneten und als Durchbrüche durch den Ring 32 ausgebildeten Rastkörperfassungen 40 versehen, in welchen als Kugeln ausgebildete und ein erstes Rastelement darstellende Rastkörper 42 liegen, welche, wie in Fig. 3 dargestellt, einen Durchmesser aufweisen, der größer als eine Dicke des Rings 32, gemessen in Richtung parallel zur Drehachse 20, ist.

Die Rastkörperfassungen 40 sind dabei so ausgebildet, daß die Rastkörper 42 in dem Ring 32 sowohl in radialer Richtung zur Drehachse 20 als auch in azimutaler Richtung fixiert sind und lediglich die Möglichkeit haben, sich in einer Rastrichtung 44, welche parallel zur Drehachse 20 verläuft, relativ zum Ring 32 zu bewegen.

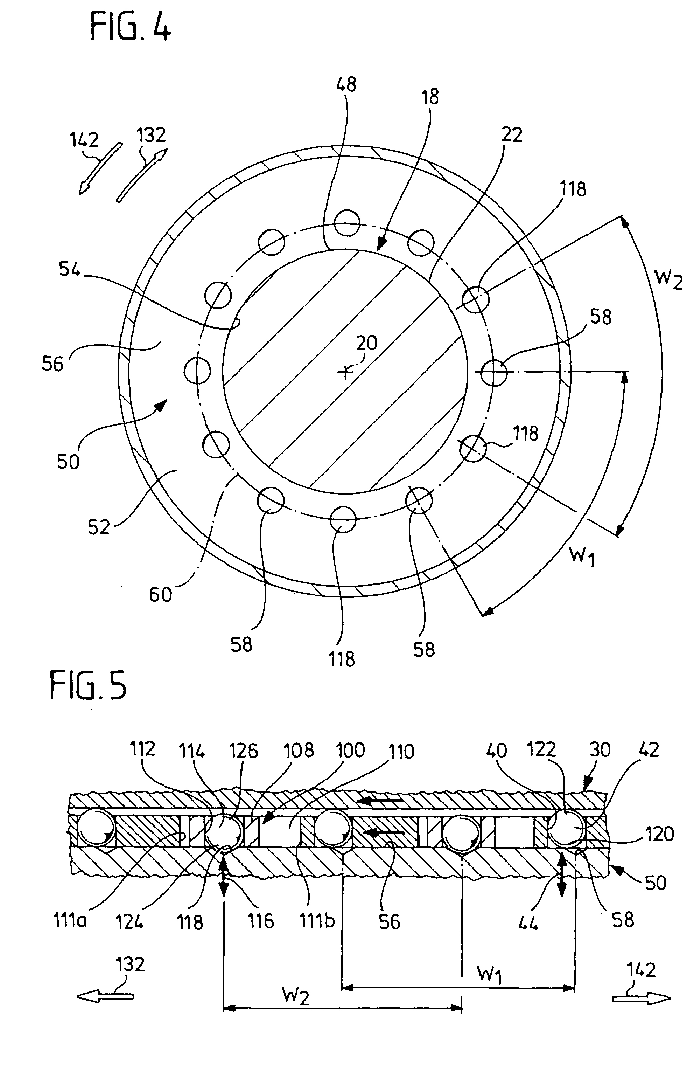

Auf einer dem ersten Ende 12 abgewandten Seite des Teilbereichs 24 der Außenmantelfläche 22 liegt ein weiterer Teilbereich 48 der Außenmantelfläche 22, welcher ein als Ganzes mit 50 bezeichnetes zweites Kupplungselement führt, welches, wie in Fig. 4 dargestellt, ebenfalls aus einem zweiten Ring 52 gebildet ist, der mit einer zylindrischen inneren Ringfläche 54 an der zylindrischen Außenumfangsfläche 22 im Teilbereich 48 anliegt und somit relativ zum Führungsansatz 18 um die Drehachse 20, und zwar koaxial zu dieser, drehbar ist.

Der zweite Ring 52 ist dabei mit einer Vielzahl von im Winkelabstand W1 angeordneten und als Vertiefungen in einer senkrecht zur Drehachse 20 verlaufenden und dem ersten Kupplungselement 30 zugewandten Planfläche 56 ausgebildeten und ein zweites Rastelement bildenden Rastkörperaufnahmen 58 versehen, wobei die Rastkörperaufnahmen auf einer Kreislinie 60 um die Drehachse 20 angeordnet sind, welche denselben Radius wie die Kreislinie 38 aufweist. Die Rastkörperaufnahmen 58 sind vorzugsweise über einem Winkelbereich bezüglich der Drehachse 20 wirksam und beispielsweise kugelkappenförmig oder als konische Senkungen ausgebildet. Es ist aber auch denkbar die Rastkörperaufnahmen als in radialer Richtung zur Drehachse verlaufende Kerben mit beispielsweise V-förmigem Querschnitt auszubilden.

Mit einer der Planfläche 56 gegenüberliegenden Planfläche 62 liegt der zweite Ring 52 auf einem als Ganzes mit 64 bezeichneten Axiallager auf, das sich seinerseits wieder auf einer Stützscheibe 66 abstützt, welche ein zweites Ende 68 des Wellenstummels 16 bildet.

Auf der dem zweiten Kupplungselement 50 gegenüberliegenden Seite des ersten Kupplungselements 30 ist ein als Ganzes mit 70 bezeichneter Druckring angeordnet, welcher ebenfalls mit einer inneren Ringfläche 72 an dem ersten Teilbereich 24 der Außenumfangsfläche 22 und zwar relativ zum Führungsansatz 18 drehbar gelagert ist.

Der Druckring 70 weist dabei eine dem ersten Kupplungselement 30 zugewandte ringförmige Druckfläche 74 auf, während eine der Druckfläche gegenüberliegende Auflagefläche 76 des Druckrings 70 sich auf einem Axiallager 80 abstützt, das seinerseits wiederum mit einer Druckscheibe 82 beaufschlagt ist, auf welche ein als Ganzes mit 84 bezeichnetes Tellerfederpaket wirkt, das um einen Lagerabschnitt 86 des Wellenstummels 16 herum angeordnet und durch eine Stellmutter 88 beaufschlagt ist, die ihrerseits auf einen Gewindeabschnitt 90 des Wellenstummels 16 aufgeschraubt ist. Mit der Stellmutter 88 ist eine Vorspannung des Tellerfederpakets 84 und somit eine parallel zur Drehachse 20 verlaufende Kraft einstellbar, mit welcher der Druckring 70 auf das erste Kupplungselement 30 wirkt (Fig. 1).

Um das erste Kupplungselement 30 herum ist ein als Ganzes mit 100 bezeichnetes Halteelement angeordnet (Fig. 2), welches einen Führungsring 102 aufweist, welcher mit einer inneren Ringfläche 104 an einer äußeren Ringfläche 106 des ersten Rings 32 koaxial zur Drehachse 20 geführt ist und welcher Mitnehmerfinger 108 aufweist, von denen jeder in einen gegenüber der äußeren Ringfläche 106 des Rings 32 zurückspringende Ausschnitt 110 eingreift, wobei jeder Mitnehmerfinger in jedem der Ausschnitte 110 zwischen einander gegenüberliegenden, vorzugsweise in radialer Richtung verlaufenden Seitenwänden 111a, b des jeweiligen Ausschnitts 110 über einen begrenzten Winkelbereich WB verdrehbar ist.

Die Mitnehmerfinger 108 sind ihrerseits in einem Winkelabstand W2 an dem Führungsring 102 angeordnet und greifen in die jeweiligen in entsprechenden Winkelabständen angeordneten Ausschnitte 110 des Rings 32 ein, so daß insgesamt der Führungsring 102 gegenüber dem Ring 32 des ersten Kupplungs-elements 30 um den Winkelbereich WB verdrehbar ist (Fig. 2).

Jeder der an dem Führungsring 102 angeformten Mitnehmerfinger 108 ist seinerseits mit einer Stellnockenfassung 112 versehen, in welcher jeweils ein als Ganzes mit 114 bezeichneter und als Kugel ausgebildeter Stellnocken angeordnet ist. Die Stellnockenfassung 112, ist in gleicher Weise wie die Rastkörperfassung 40 als Durchbruch durch den Mitnehmerfinger 108 ausgeführt, führt dabei den jeweiligen Stellnocken 114 so, daß dieser relativ zum Mitnehmerfinger 108 in einer Stellrichtung 116 parallel zur Drehachse 20 bewegbar ist, ansonsten aber gegen radiale Bewegung zur Drehachse 20 und azimutale Bewegung zu dieser relativ zum Mitnehmerfinger 108 fixiert ist.

Vorzugsweise sind die Stellnockenfassungen 112 auf derselben Kreislinie 38 angeordnet wie die Rastkörperfassungen 40 in dem Ring 32 des ersten Kupplungselements 30.

Die Dicke des Führungsrings 102 und der Mitnehmerfinger 108, gemessen in Richtung der Drehachse 20, entspricht dabei ungefähr der Dicke des Rings 32 oder ist geringfügig kleiner.

Ferner sind die als Kugeln ausgebildeten Stellnocken 114 im wesentlichen gleich groß wie die als Rastkörper 42 dienenden Kugeln.

Zusätzlich zu den Rastkörperaufnahmen 58 weist das zweite Kupplungselement 50 ebenfalls als von der Planfläche 56 ausgehende Vertiefungen ausgebildete Stellnockengegenlager 118 auf, welche in einem Winkelabstand W2 voneinander und auf der um die Drehachse 20 verlaufenden Kreislinie 60 liegen. Die Vertiefungen sind vorzugsweise über einen Winkelbereich bezüglich der Drehachse 20 wirksam und können beispielsweise kugelkappenförmige oder kugelförmige Senkungen sein. Es ist aber auch möglich, die Vertiefungen als in radialer Richtung zur Drehachse 20 verlaufende Kerben mit beispielsweise V-förmigem Querschnitt auszubilden.

Vorzugsweise sind die Stellnockengegenlager 118 jeweils mittig zwischen den Rastkörperaufnahmen 58 angeordnet und der Winkelabstand W2 der Stellnockengegenlager 118 ist identisch mit dem Winkelabstand W1 der Rastkörperaufnahmen 58, so daß jeweils eine Rastkörperaufnahme 58 in dem Winkelabstand W1/2 oder W2/2 auf ein Stellnockengegenlager 118 folgt, wie in Fig. 4 dargestellt.

Bei der in Fig. 3 dargestellten eingekuppelten Stellung sind die Kupplungselemente 30, 50 so gegeneinander gedreht, daß die Rastkörper 42 und die Rastkörperaufnahmen 58 paarweise in einer Kupplungsdrehstellung einander gegenüberstehen und folglich die Rastkörper 42 längs der Rastrichtung 44 in eine wirksame Stellung bewegbar sind, in welcher die Rastkörper 42 mit einer unteren Kugelkappenfläche 120 in die Rastkörperaufnahmen 58 eingreifen und somit eine drehfeste Verbindung zwischen dem ersten Kupplungselement 30 und dem zweiten Kupplungselement 50 bilden, die dadurch unmittelbar zusammenwirken. Um die wirksame Stellung aufrecht zu erhalten, und die Rastkörper 42 mit ihren Kugelkappenflächen 120 in Eingriff mit den Rastkörperaufnahmen 58 zu erhalten, sind diese in ihrer Kupplungsdrehstellung durch die Druckfläche 74 des Druckrings 70 im Bereich ihrer der Kugelkappenfläche 120 gegenüberliegenden oberen Kugelkappenfläche 122 beaufschlagt, so daß die als Kugeln ausgebildeten Rastkörper 42 mit ihren Kugelkappenflächen 120 fest in dem Rastkörperaufnahmen 58 sitzen, über die Rastkörperfassungen des Rings 32 mitgenommen werden und somit einer Drehbewegung des Rings 32 mit dem Wellenstummel 16 folgen, dabei auch dann das zweite Kupplungselement 50 mitnehmen, welches beispielsweise mit einem Abtriebselement 130 verbunden ist, welches die Stützscheibe 66 übergreift und in drehfester, vorzugsweise formschlüssiger Drehverbindung mit dem zweiten Kupplungselement 50 steht.

Damit in der Kupplungsstellung der Rastkörper 42 relativ zu den Rastkörperaufnahmen 58 die Kraft des Druckrings 70 auf die Rastkörper 42 wirken kann, steht das Halteelement 100 in seiner inaktiven Stellung. In dieser inaktiven Stellung liegen die als Stellelemente dienenden Stellnocken 114 mit ihren unteren Kugelkappenflächen 124 in den ebenfalls als Vertiefungen ausgebildeten und ebenfalls als Stellelemente dienenden Stellnockengegenlagern 118, wobei die als Kugeln ausgebildeten Stellnocken 114 ebenfalls mit ihren den Kugelkappenflächen 124 gegenüberliegenden Kugelkappenflächen 126 durch die Druckfläche 74 des Druckrings 70 beaufschlagt sind. Voraussetzung dafür, daß das Halteelement 100 in der inaktiven Stellung stehen kann ist, daß die Stellelemente 114, 118 relativ zueinander und paarweise in einem Ausgangsdrehstellung (Fig. 2, 3) stehen und durch die Wirkung des Druckrings in Stellrichtung 116 in Eingriff bringbar sind. Sind die Stellnocken 114 Kugeln mit identischem Durchmessers wie die Rastkörper 42, und die Stellnockengegenlager 118 gleich geformt wie die Rastkörperaufnahmen 58, so erfahren sowohl die Stellnocken 114 als auch die Rastkörper 42 jeweils dieselbe Kraftwirkung über die Druckfläche 74 in Richtung des zweiten Kupplungselements 50.

Um in der inaktiven Stellung zu stehen, ist das Halteelement 100 relativ zum ersten Kupplungselement 30 in die Ausgangsdrehstellung zu drehen, daß, wie in Fig. 2 dargestellt, die Stellnockenfassungen 112 in dem Winkelabstand von den Rastkörperfassungen 40 angeordnet sind, der dem Winkelabstand der Stellnockengegenlager 118 von der jeweils nächstbenachbarten Rastkörperaufnahme 58 entspricht, so daß in dem dargestellten Ausführungsbeispiel die Stellnockenfassungen 112 im Winkelabstand W1/2 oder W2/2 von der jeweils nächstbenachbarten Rastkörperfassung 40 stehen. Vorzugsweise liegen in dieser Stellung des Halteelements 100 die Mitnehmerfinger 108 an den Seitenwänden 111a der Ausschnitte 110 an, während zwischen den Mitnehmerfingern 108 und der Seitenwand 111b ein Winkelabstand entsprechend WB verbleibt.

Die erfindungsgemäße Kupplung ist dann funktionswirksam, wenn sich der Wellenstummel 16 in einer Drehrichtung 132 dreht, wobei die Seitenwand 111a die in Drehrichtung 132 vorne liegende und die Seitenwand 111b die in Drehrichtung 132 hinten liegende Seitenwand ist.

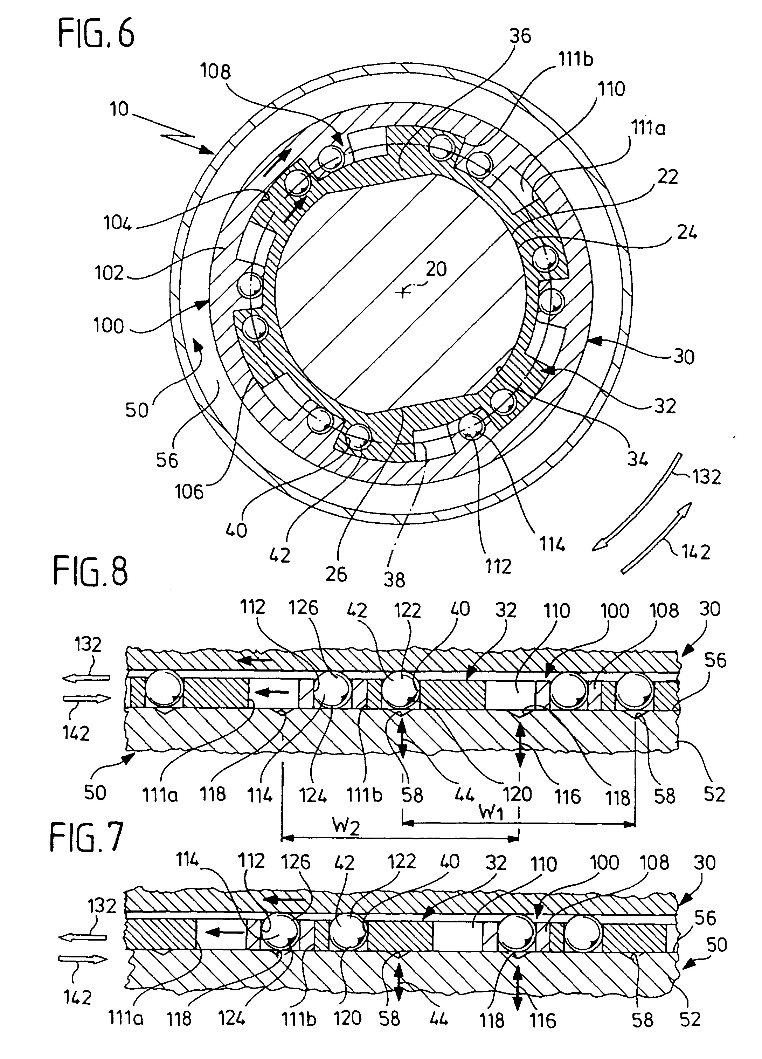

Wird nun das Abtriebselement 130 beispielsweise in seiner Drehbewegung blockiert oder erfährt dieses mindestens ein ausreichend großes Gegendrehmoment, so wird ein sogenanntes Ausrastmoment der Kupplung 10 überschritten, wobei die Verhältnisse unmittelbar nach einem Blockieren des Abtriebselements 130 in Fig. 5 dargestellt sind.

Dreht sich dabei das erste Kupplungselement 30 in der Drehrichtung 132 bei blockiertem Abtriebselement 130 und somit auch hinsichtlich seiner Drehbewegung blockiertem zweitem Kupplungselement 50 ausgehend von der Kupplungsdrehstellung relativ zum zweiten Kupplungselement 50 weiter, so führt dies dazu, daß die Rastkörper 42 aufgrund ihrer als Schrägfläche wirkenden Kugelkappenfläche 120 die Rastkörperaufnahmen 58 verlassen, was allerdings bewirkt, daß die Rastkörper 42 mit ihren Kugelkappenflächen 122 auf die Druckfläche 74 des Druckrings 70 entgegengesetzt zur Kraft des Tellerfederpakets 84 einwirken und den Druckring 70 beim Verlassen der Rastkörperaufnahmen 58 von dem zweiten Kupplungselement 50 wegbewegen und zwar bis zu einem Abstand zwischen Planfläche 56 und Druckfläche 74, welcher dem Durchmesser der als Kugeln ausgebildeten Rastkörper 42 entspricht (Fig. 5).

Damit fehlt nun eine drehfeste Verbindung zwischen dem ersten Kupplungselement 30 und dem zweiten Kupplungselement 50, wobei sich das erste Kupplungselement 30 in Drehrichtung 132 weiterbewegt und dabei sich die Rastkörper 42 auf der Planfläche 56 abwälzen, so daß der Druckring 70 sich ebenfalls in Richtung 132 dreht, allerdings mit der doppelten Geschwindigkeit als das erste Kupplungselement 30, da die sich als Kugeln ausgebildeten Rastkörper 42 auf der feststehenden Planfläche 56 des zweiten Kupplungselements 50 abwälzen. Diese Drehbewegung des ersten Kupplungselements 30 relativ zum zweiten Kupplungselement 50 ist so lange auf das Halteelement 100 ohne Einfluß, so lange aufgrund der Größe der Ausschnitte 110 das Spiel von WB zwischen dem Mitnehmerfinger 108 und einer jeweils in Drehrichtung hinteren Seitenwand 111b des jeweiligen den Mitnehmerfinger 108 aufnehmenden Ausschnitts 110 besteht und folglich das Halteelement 100 relativ zum zweiten Kupplungselement 50 in der Ausgangsdrehstellung verbleibt. Besteht dieses Spiel durch das weiterdrehen des Rings 32 zum stehenden Führungsring 102 nicht mehr, sondern liegt die in Drehrichtung hintere Seitenwand 111b an dem jeweiligen Mitnehmerfinger 108 an (Fig. 6), so wird das Halteelement 100 von der Drehbewegung des ersten Kupplungselements 30 in Drehrichtung 132 mitgenommen und verläßt die Ausgangsdrehstellung relativ zum zweiten Kupplungselement 50, wobei die Stellnocken 114 - wie in Fig. 7 dargestellt - problemlos aus den Stellnockengegenlagern 118 herauslaufen können, da die obere Kugelkappenfläche 126 der als Kugeln ausgebildeten Stellnocken 114 nicht mehr durch die Druckfläche 74 des Druckrings 70 beaufschlagt ist, so daß die als Kugeln ausgebildeten Stellnocken 114 nach Verlassen der Stellnockengegenlager 118 ebenfalls sich auf der Planfläche 56 abwälzend bewegen.

Durch die Herausnahme des Spiels zwischen der Seitenwand 111b des jeweiligen Ausschnitts 110 und dem jeweiligen Mitnehmerfinger 108 ist eine begrenzte Relativdrehung des Halteelements 100 zum ersten Kupplungselement 30 erfolgt (Fig. 6), so daß nunmehr die Stellnockenfassungen 112 nicht mehr im Winkelabstand W1/2 oder W2/2 zur jeweils folgenden Rastkörperfassung 40 stehen. Damit wird entweder von den Rastkörpern 42 oder den Stellnocken 114 ein Abstand zwischen der Druckfläche 74 des Druckrings 70 und der Planfläche 56 des zweiten Kupplungselements 50 aufrecht erhalten, so daß einerseits der Druckring 70 dann, wenn die Rastkörper 42 in der Kupplungsdrehstellung über den Rastkörperaufnahmen 58 stehen, diese nicht in Rastrichtung 44 in die Rastkörperaufnahmen 58 hinein bewegen kann (Fig. 8) und andererseits der Druckring 70 auch bei Erreichen der Ausgangsdrehstellung zwischen Halteelement 100 und zweitem Kupplungselement 50 die als Kugeln ausgebildeten Stellnocken 114 nicht in Stellrichtung 116 in die Stellnockengegenlager 118 bewegen kann (Fig. 7).

Aufgrund der vorzugsweise über einen Winkelbereich wirksamen Rastkörperaufnahmen 58 und Stellnockengegenlager 118 tragen bei einer Drehung des ersten Kupplungselements 30 zum zweiten Kupplungselement 50 die Rastkörper 42 und die Stellnocken 114 nur über einen schmalen Winkelbereich von kleiner 5°, vorzugsweise 2°, gemeinsam, in allen übrigen Drehstellungen stehen entweder die Rastkörper 42 in Kupplungsdrehstellung oder die Stellnocken 114 in Ausgangsdrehstellung relativ zum zweiten Kupplungselement.

Damit bleibt bei weiterlaufendem Antrieb des Wellenstummels 16 die Kupplung gelöst und aufgrund der sich abwälzenden Rastkörper 42 und Stellnocken 114 sind das erste Kupplungselement 30 und das von diesem mitgenommene Halteelement 100 ohne nennenswertes Gegendrehmoment unbegrenzt gegenüber dem zweiten Kupplungselement 50 drehbar.

Die Kupplung 10 ist somit so lange gelöst, bis ein Antrieb des Wellenstummels 16 unterbrochen wird und ein Drehen des Wellenstummels 16 in Drehrichtung 142, entgegengesetzt zur Drehrichtung 132, erfolgt. Dadurch wird das erste Kupplungselement 30 gegenüber dem Halteelement 100 entgegengesetzt zur Drehrichtung 132 so weit verdreht, daß die Mitnehmerfinger 108 sich von der in Drehrichtung 132 hinteren Seitenwand 111b wegbewegen und zwar so lange, bis diese wieder an der in Drehrichtung 132 vorderen Seitenwand 111a anliegen (Fig. 2). In dieser Stellung der Mitnehmerfinger 108 stehen die Rastkörper 42 und die Stellnocken 114 wieder in einem Winkelabstand W1/2 oder W2/2, so daß bei Erreichen der Kupplungsdrehstellung, d.h. paarweiser deckungsgleicher Stellung der Rastkörper 42 mit den Rastkörperaufnahmen 58, und gleichzeitig möglichem Erreichen der Ausgangsdrehstellung d.h. paarweiser deckungsgleicher Stellung der Stellnocken 114 mit den Stellnockengegenlagern 118, diese wieder unter Einwirkung der Kraft des Tellerfederpakets 84 miteinander in Eingriff kommen und die eingekuppelte Stellung gemäß Fig.3 erreicht wird.

Der Übergang von der ausgekuppelten Stellung in die eingekuppelte Stellung wird dadurch erleichtert, daß die Rastkörper 42 und die Stellnocken 114 nur über einen schmalen Winkelbereich gemeinsam tragen und daher beim Drehen entgegengesetzt zur Drehrichtung 132 eine geringe Relativdrehung zwischen erstem Kupplungselement 30 und Halteelement 100 ausreicht, um beide gleichzeitig in die Kupplungsdrehstellung und Ausgangsdrehstellung zu bringen.

Soll die Kupplung 10 so ausgebildet sein, daß ein Übergang von der eingekuppelten Stellung in die ausgekuppelte Stellung unabhängig von der Antriebsdrehrichtung erfolgt, so sind die Ausschnitte 110 so auszubilden, daß die in diese eingreifenden Mitnehmerfinger 108 ausgehend von der Ausgangsdrehstellung des Halteelements 100 sich in beide Drehrichtungen mit Spiel WB bewegen können. Damit ist dann die inaktive Drehstellung relativ zum ersten Kupplungselement 30 nicht mehr durch die Seitenwand 111a definiert, sondern nur noch durch die Stellnockengegenlager 118, wobei die inaktive Drehstellung durch die sich über einen Winkelbereich erstreckende, z.B. V-förmige oder konische Ausbildung der Stellnockengegenlager 118, insbesondere bei ebenfalls sich über einen Winkelbereich erstreckender z.B. V-förmiger oder konischer Ausbildung der Rastkörperaufnahme 58, sicher erreichbar ist.

Zusammenfassend ist somit die erfindungsgemäße Kupplung 10 bei Überschreiten des Ausrastmoments von der eingekuppelten (Fig. 3) in die ausgekuppelte Stellung (Fig. 7 ,8) überführbar, ohne daß in dieser ausgekuppelten Stellung ein nennenswertes Gegendrehmoment zwischen dem ersten Kupplungselement 30 und dem zweiten Kupplungselement 50 aufgrund einer Berührung der Rastelemente 42, 58 auftritt.

Das in Fig. 1 dargestellte Ausführungsbeispiel einer erfindungsgemäßen Kupplung 10 stellt eine separat einsetzbare Baugruppe für Werkzeugmaschinen dar, wobei beispielsweise die zeichnerisch nicht dargestellte Werkzeugmaschine mit ihrer Abtriebswelle den Wellenstummel 16 am ersten Ende 12 antreibt und über das Abtriebselement 130 direkt oder indirekt ein rotierendes Werkzeug, vorzugsweise ein rotierendes Schneidwerkzeug, beispielsweise eine Bohrkrone, angetrieben wird.

Die erfindungsgemäße, als separate Baugruppe ausgebildete Kupplung 10 kann aber auch in umgekehrter Weise eingesetzt werden, das heißt es kann ein Antrieb über das Abtriebselement 130 erfolgen, und ein Antrieb eines Werkzeugs über den Wellenstummel 16.

In diesem Fall funktioniert die erfindungsgemäße Kupplung in der vorstehend beschriebenen Weise ebenfalls, mit dem Unterschied, daß ein Antrieb des Antriebselements mit einer Drehrichtung 142 zu erfolgen hat, welche genau entgegengesetzt zur Drehrichtung 132 verläuft. In diesem Fall bleibt dann bei blockierter Drehbewegung des Wellenstummels 16 das erste Kupplungselement 30 stehen, während sich das zweite Kupplungselement 50 weiterbewegt, wodurch ebenfalls die Rastkörper 42 den Druckring 70 von dem zweiten Kupplungselement 50 weg bewegen. Ferner bewegt sich zunächst das Halteelement 100 mit dem zweiten Kupplungselement 50 in Drehrichtung 142 so lange mit, bis die Mitnehmerfinger 108 an den Seitenwänden 111b anliegen. In dieser Stellung sind in gleicher Weise wie vorstehend ausführlich beschrieben, das Halteelement 100 und das erste Kupplungselement 30 so weit gegeneinander verdreht, daß die erfindungsgemäße Kupplung 10 in ihrer ausgekuppelten Stellung verbleibt, so lange, bis ein Antrieb des Abtriebselements 130 unterbrochen wird und das Abtriebselement 130 entgegengesetzt zur Drehrichtung 142 gedreht wird.

Bei einem zweiten Ausführungsbeispiel 210 einer erfindungsgemäßen Kupplung ist diese in eine als Ganzes mit 160 bezeichnete und schematisch dargestellte Werkzeugmaschine integriert.

Die Werkzeugmaschine umfaßt einen Antriebsmotor 162, welcher in einem Gehäuse 164 der Werkzeugmaschine aufgenommen ist und eine Abtriebswelle 166 aufweist, die ihrerseits nochmals über ein Lager 168 in dem Gehäuse 164 gelagert ist und auf welcher ein Zahnrad 170 sitzt, das mit einer Außenverzahnung 172 des zweiten Kupplungselements 250 kämmt. Bei diesem zweiten Ausführungsbeispiel 210 der erfindungsgemäßen Kupplung ist der Wellenstummel 216 an seinem ersten Ende 212 und mit einem sich an die Stützscheibe 266 anschließenden zylindrischen Abschnitt 267 in dem Gehäuse 164 gelagert und im Anschluß an den zylindrischen Abschnitt 267 fest mit einem Bohrwerkzeug 174, vorzugsweise eine Bohrkrone verbunden.

Im Gegensatz zum ersten Ausführungsbeispiel erfolgt somit bei dem zweiten Ausführungsbeispiel 210 der erfindungsgemäßen Kupplung ein Antrieb mittels des Antriebsmotors 162 über das zweite Kupplungselement 250, während das drehfest mit dem Wellenstummel 216 verbundene erste Kupplungselement 30 dann über den Wellenstummel 216 das Werkzeug 174 antreibt.

Das zweite Ausführungsbeispiel 210 der erfindungsgemäßen Kupplung funktioniert dabei in gleicher Weise, wie im Zusammenhang mit dem Antrieb des ersten Ausführungsbeispiels 10 der erfindungsgemäßen Kupplung über das Abtriebselement 130 in Drehrichtung 142 beschrieben.

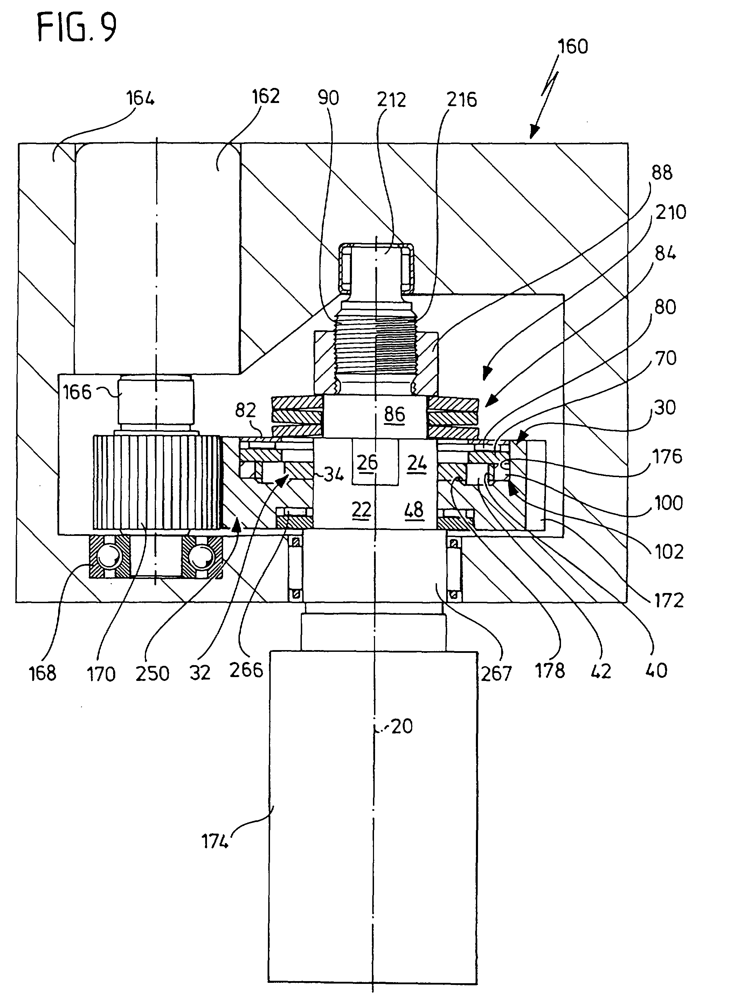

Bei dem zweiten Ausführungsbeispiel der erfindungsgemäßen Kupplung 210, dargestellt in Fig. 9, ist in Abweichung zum ersten Ausführungsbeispiel 10 der erfindungsgemäßen Kupplung das zweite Kupplungselement mit einer als Ganzes mit 176 bezeichneten Ausnehmung versehen, deren Bodenfläche 178 die im Zusammenhang mit dem ersten Ausführungsbeispiel 10 beschriebene Planfläche 56 bildet, wobei die Rastkörperaufnahmen und die Stellnockengegenlager ebenfalls als zusätzliche Ausnehmungen eingeformt sind.

In die Ausnehmung 176 ist dann das erste Kupplungselement 30, der Druckring 70 das Axiallager 80 und die Druckscheibe 82 eingesetzt, so daß diese raumsparend und zusätzlich gekapselt in dem zweiten Kupplungselement 250 angeordnet sind. Auf die Druckscheibe 82 wirkt das im Anschluß an das zweite Kupplungselement 250 angeordnete und auf dem Wellenstummel 216 sitzende Tellerfederpaket 84 das sich seinerseits wiederum an der Stellmutter 88 abstützt.

Ferner ist bei dem zweiten Ausführungsbeispiel 210 der erfindungsgemäßen Kupplung anstelle der als Kugeln ausgebildeten Rastkörper 42 sowie der Stellnocken 114 die Verwendung von Rollen als Wälzkörper vorgesehen, welche um eine radial zur Drehachse 20 des Wellenstummels 16 verlaufende Achse drehbar sind.

Hinsichtlich der übrigen Merkmale und Funktionen des zweiten Ausführungsbeispiels wird vollinhaltlich auf die Ausführungen zum ersten Ausführungsbeispiel Bezug genommen.

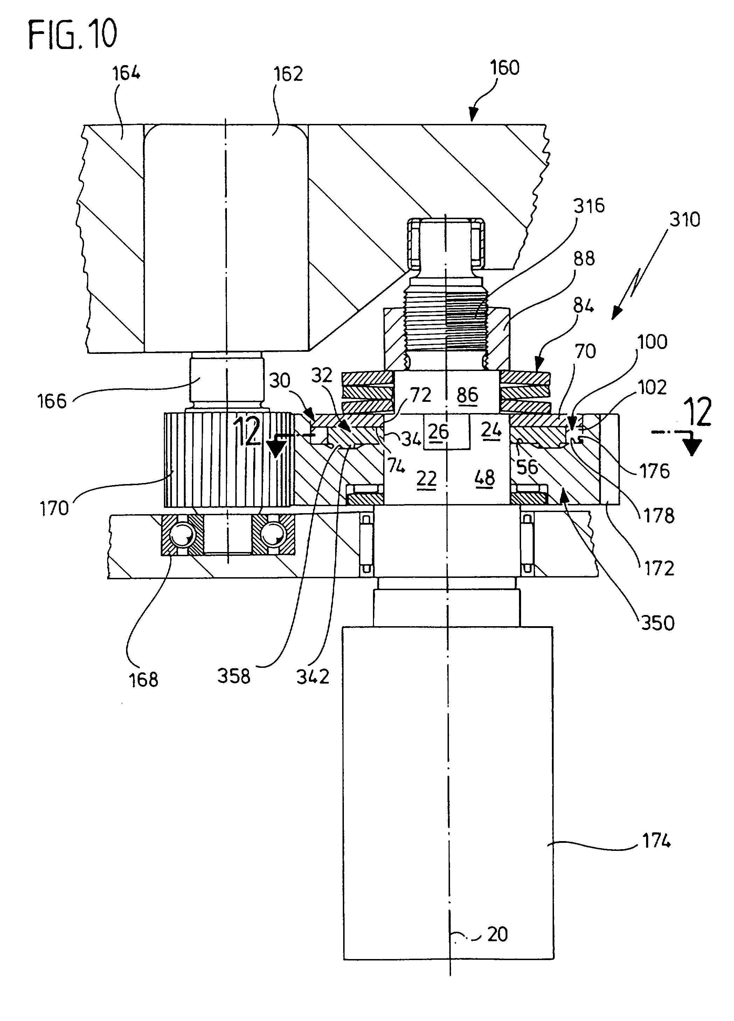

Bei einem dritten Ausführungsbeispiel einer erfindungsgemäßen Kupplung 310, dargestellt in Fig. 10 erfolgt ein Antrieb derselben und ein Antrieb des Werkzeugs mittels dieser Kupplung 310 in gleicher Weise wie im Zusammenhang mit dem zweiten Ausführungsbeispiel beschrieben, so daß für die gleichen Teile dieselben Bezugszeichen verwendet werden und auf die Beschreibung dieser Teile im Zusammenhang mit dem zweiten Ausführungsbeispiel vollinhaltlich Bezug genommen wird.

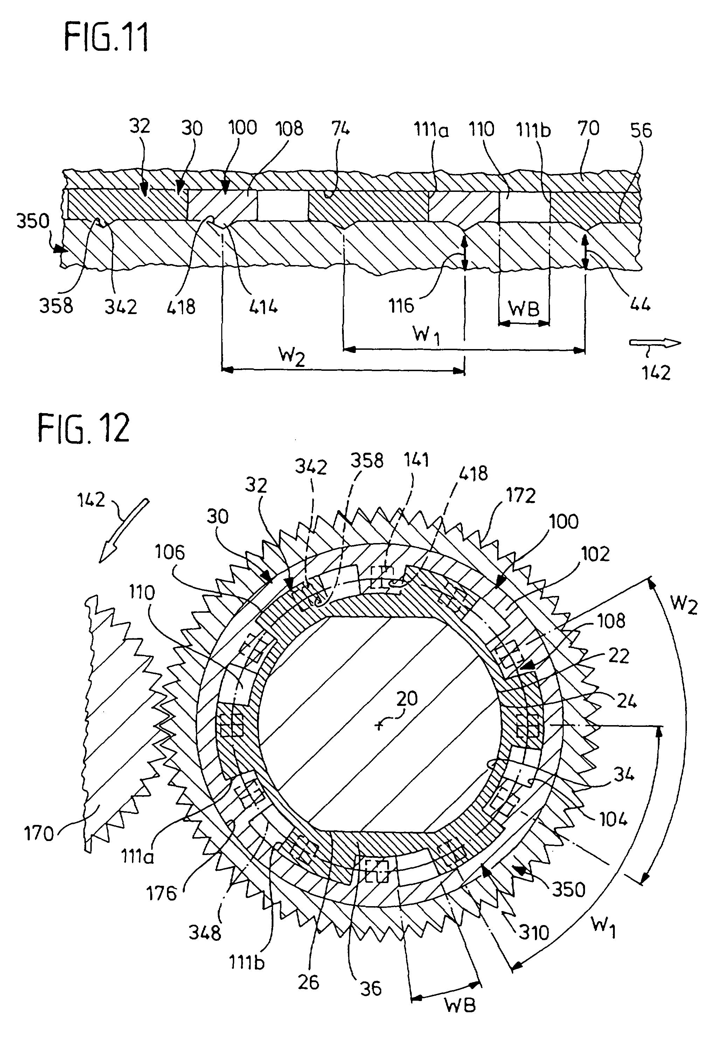

Im Gegensatz zum ersten und zweiten Ausführungsbeispiel ist bei dem dritten Ausführungsbeispiel 310 der erfindungsgemäßen Kupplung, wie in Fig. 11 dargestellt, anstelle einer Kugel als Rastkörper eine Erhöhung 342 beispielsweise einstückig an den ersten Ring 32 angeformt, so daß auch die Rastkörperfassungen 40 entfallen können. Ferner ist ebenfalls anstelle eines als Kugel ausgebildeten Stellnockens 114 eine Erhöhung 414, beispielsweise einstückig, an den jeweiligen Mitnehmerfinger 108 angeformt, so daß auch die Stellnockenfassungen 112 entfallen können. Die Rastkörper 342 und die Stellnocken 414 liegen aber nach wie vor, wie in Fig. 12 dargestellt, auf der Kreislinie 348 um die Drehachse 20. Ferner sind die Rastkörper 342 in Winkelabständen W1 an dem ersten Ring 32 angeordnet und die Stellnocken 414 in Winkelabständen W2 an den Mitnehmerfingern 108 des Führungsrings 102.

Die Rastkörperaufnahmen 358 und die Stellnockengegenlager 418 sind in den selben Winkelabständen W1 bzw. W2 in der Planfläche 56 des zweiten Kupplungselements 350 der erfindungsgemäßen Kupplung angeordnet, in gleicher Weise wie beim ersten Ausführungsbeispiel, wobei die Rastkörperaufnahmen 358 und die Stellnockengegenlager 418 in ihrer Form den Rastkörpern 342 bzw. den Stellnocken 414 angepaßt sind. Vorzugsweise haben die Rastkörper 342 und die Stellnocken 414 dieselbe, im wesentlichen dreieckige Querschnittsform, wenn in radialer Richtung zur Drehachse 20 betrachtet.

Im Gegensatz zum ersten und zweiten Ausführungsbeispiel ist bei dem dritten Ausführungsbeispiel vorgesehen, daß der Druckring 70 mit seiner Druckfläche 74 unmittelbar auf den ersten Ring 32 bzw. den Führungsring 102 mit den Mitnehmerfingern 108 wirkt und zwar auf deren jeweils den Rastkörpern 342 bzw. Stellnocken 414 gegenüberliegenden Oberflächen.

Das dritte Ausführungsbeispiel der erfindungsgemäßen Kupplung funktioniert so, wie im Zusammenhang mit dem ersten Ausführungsbeispiel 10 der erfindungsgemäßen Kupplung im Falle eines Antriebs über das Abtriebselement 130 beschrieben.

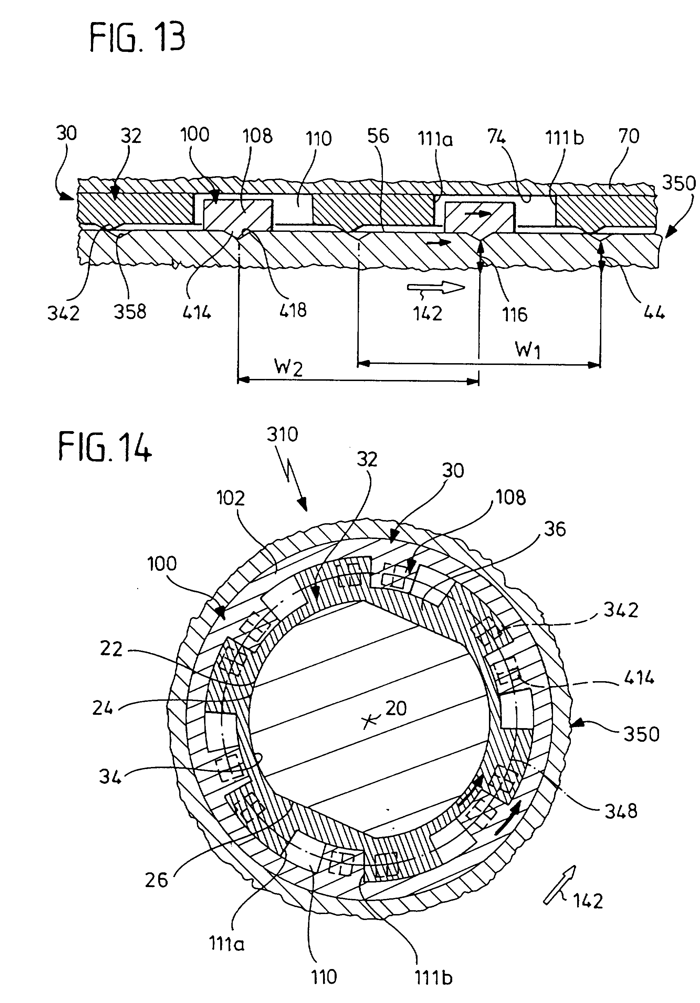

Wie in Fig. 13 dargestellt, dreht sich bei blockiertem Wellenstummel 316 und somit ebenfalls blockiertem ersten Kupplungselement 30 das zweite Kupplungselement 350 weiter, wodurch die Rastkörper 342 aus den Rastkörperaufnahmen 358 herausgleiten und den Druckring 70 von der Planfläche 56 des zweiten Kupplungselements 350 gegen die Kraft des Tellerfederpakets 84 weg bewegen. Somit dreht sich das zweite Kupplungselement 350 weiter in Drehrichtung 142. Bei dieser Drehung nimmt das zweite Kupplungselement das zunächst mit den Stellnocken 414 noch in die Stellnockengegenlager 418 eingreifende Halteelement 100 so lange mit, bis die Mitnehmerfinger 108 an den Seitenwänden 111b der Ausschnitte 110 zur Anlage kommen (Fig. 14).

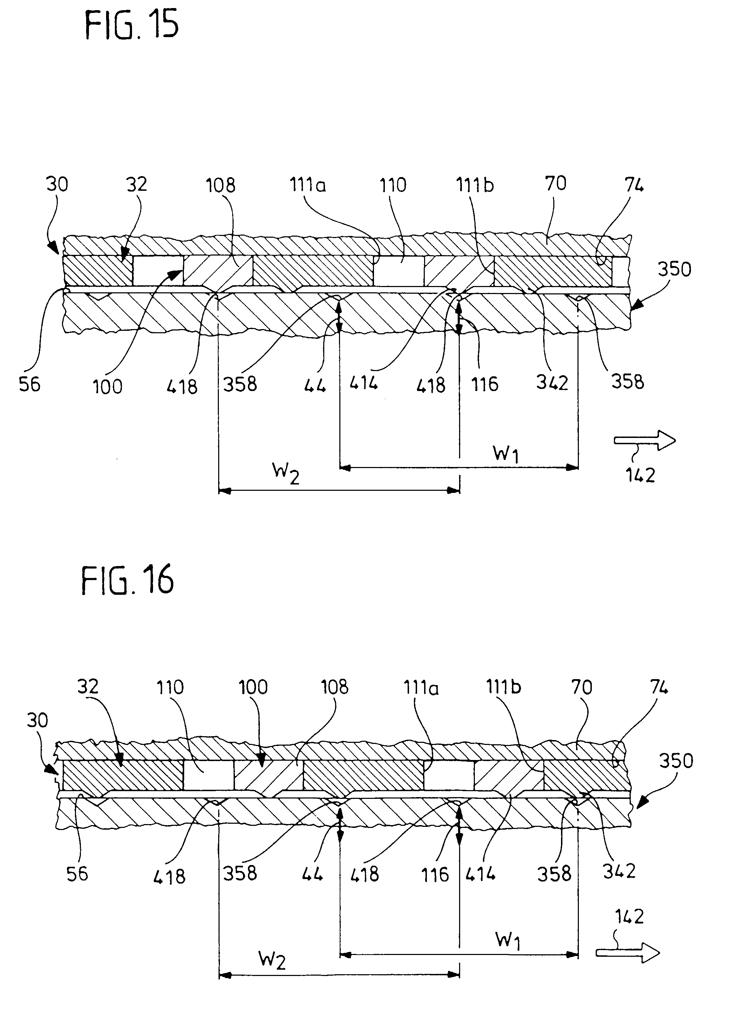

Damit ist das Halteelement 100 relativ zum ersten Kupplungselement 30 so weit verdreht, daß die Mitnahme des Halteelements 100 durch das zweite Kupplungselement 350 blockiert wird, somit auch die Stellnocken 414 außer Eingriff mit den Stellnockengegenlagern 418 kommen und das Halteelement 100 als Ganzes ebenfalls von dem zweiten Kupplungselement 350 wegbewegt wird und mit seiner den Stellnocken 414 gegenüberliegenden Fläche an der Druckfläche 74 des Druckrings 70 anliegt, wie in den Fig. 14 bis 16 dargestellt. In dieser aktiven Drehstellung von Halteelement 100 und erstem Kupplungselement 30 bleibt die Kupplung in ihrer ausgekuppelten Stellung.

Im Gegensatz zu den ersten beiden Ausführungsbeispielen tritt in der gelösten Stellung der Kupplung noch eine Gleitreibung zwischen den durch die Kraft des Tellerfederpakets 84 beaufschlagten Rastkörpern 342 oder den Stellnocken 414 und der Planfläche 56 des zweiten Kupplungselements 350 auf, so daß das Gegendrehmoment größer ist als bei der Rollreibung durch die Wälzkörper des ersten oder zweiten Ausführungsbeispiels.

Ein Einrücken der Kupplung in die eingekuppelte Stellung erfolgt in gleicher Weise wie im Zusammenhang mit dem ersten Ausführungsbeispiel beim Antrieb über das Abtriebselement 130 beschrieben.

Im übrigen wird hinsichtlich des Aufbaus und der Funktion der einzelnen Bauteile vollinhaltlich auf die Beschreibung zum ersten und zweiten Ausführungsbeispiel Bezug genommen.

## Patentansprüche

1. Kupplung, insbesondere für motorisch angetriebene Werkzeugmaschinen, welche beim Auftreten eines bestimmten Auslösedrehmoments lösbar ist, umfassend ein um eine Drehachse (20) drehbares Kupplungselement (30) mit mindestens einem ersten Rastelement (42, 342), und ein weiteres um die Drehachse (20) drehbares Kupplungselement (50, 250, 350) mit mindestens einem zweiten Rastelement (58, 358), wobei in einer eingekuppelten Stellung die Rastelemente (42, 342; 58 358) relativ zueinander und bezogen auf die Drehachse (20) in einer definierten Kupplungsdrehstellung ausgerichtet sind und in einer wirksamen, ineinandergreifenden Stellung stehen und wobei in einer ausgekuppelten Stellung die Rastelemente (42, 342; 58, 358) in einer unwirksamen Stellung außer Eingriff stehen, einen elastischen Kraftspeicher (84), welcher in der eingekuppelten Stellung auf die Rastelemente (42, 342; 58, 358) im Sinne einer Aufrechterhaltung der eingekuppelten Stellung wirkt, ein Halteelement (100), welches nach Auftreten des Auslösedrehmoments von einer inaktiven Stellung in eine aktive Stellung bewegbar ist,
**dadurch gekennzeichnet**, daß in der aktiven Stellung des Halteelements (100) die Rastelemente (42, 542; 58, 358) bei angetriebener Kupplung in die Kupplungsdrehstellung hinein und aus dieser herauslaufen, daß das Halteelement (100) in der aktiven Stellung in jeder Kupplungsdrehstellung einen durch Einwirkung des elastischen Kraftspeichers (84) ausgelösten Übergang der Rastelemente (42, 342; 58, 358) von der unwirksamen Stellung in die wirksame Stellung verhindert und daß das Halteelement (100) in der inaktiven Stellung in jeder Kupplungsdrehstellung einen durch den elastischen Kraftspeicher (84) ausgelösten Übergang der Rastelemente (42, 342; 58, 358) von der unwirksamen Stellung in die wirksame Stellung zuläßt.

2. Kupplung nach Anspruch 1, dadurch gekennzeichnet, daß das Halteelement (100) nach Auftreten des Auslösedrehmoments so lange beim jeweiligen Erreichen der Kupplungsdrehstellung einen Übergang der Rastelemente (42, 342; 58, 358) von der unwirksamen Stellung in die wirksame Stellung verhindert, so lange die Kupplung antriebsseitig angetrieben ist.

3. Kupplung nach Anspruch 1 oder 2, dadurch gekennzeichnet, daß das Halteelement (100) durch eine relative Drehbewegung zwischen den Kupplungselementen (30; 50, 250, 350) in der ausgekuppelten Stellung von der inaktiven in die aktive Stellung bringbar ist.

4. Kupplung nach einem der voranstehenden Ansprüche, dadurch gekennzeichnet, daß das Halteelement (100) durch eine Drehbewegung relativ zu mindestens einem der Kupplungselemente (30) von der inaktiven in die aktive Stellung bringbar ist.

5. Kupplung nach Anspruch 4, dadurch gekennzeichnet, daß das Halteelement (100) durch eine relative Drehbewegung gegenüber beiden Kupplungselementen (30; 50, 250, 350) von der inaktiven Stellung in die aktive Stellung bringbar ist.

6. Kupplung nach einem der voranstehenden Ansprüche, dadurch gekennzeichnet, daß das Halteelement (100) eine Wirkung des elastischen Kraftspeichers (84) auf die Rastelemente (42, 342; 58; 358) im Sinne einer Bewegung derselben von der unwirksamen Stellung in die wirksame Stellung unterbindet.

7. Kupplung nach einem der voranstehenden Ansprüche, dadurch gekennzeichnet, daß das Halteelement (100) sich in der aktiven Stellung an einem zweiten Kupplungselement (50, 250, 350) abstützt.

8. Kupplung nach Anspruch 7, dadurch gekennzeichnet, daß das Halteelement (100) relativ zu dem dieses in der aktiven Stellung abstützenden zweiten Kupplungselement (50, 250, 350) um die Drehachse (20) unbegrenzt drehbar ist.

9. Kupplung nach Anspruch 8, dadurch gekennzeichnet, daß das Halteelement (100) in der aktiven Stellung gemeinsam mit einem ersten Kupplungselement (30) relativ zu dem zweiten Kupplungselement (50, 250, 350) unbegrenzt drehbar ist.

10. Kupplung nach Anspruch 9, dadurch gekennzeichnet, daß das Halteelement (100) gegenüber dem ersten Kupplungselement (30) von einer definierten inaktiven Drehstellung in eine definierte aktive Drehstellung begrenzt drehbar ist.

11. Kupplung nach einem der Ansprüche 7 bis 10, dadurch gekennzeichnet, daß das Halteelement (100) in seiner relativ zum ersten Kupplungselement (30) inaktiven Drehstellung die Möglichkeit hat, in seine inaktive Stellung überzugehen, und daß das Halteelement (100) und das zweite Kupplungselement (50, 250, 350) so ausgebildet sind, daß in mindestens einer definierten Ausgangsdrehstellung der beiden relativ zueinander das Halteelement (100) von der aktiven in die inaktive Stellung überführbar ist.

12. Kupplung nach Anspruch 11, dadurch gekennzeichnet, daß in der eingekuppelten Stellung das Halteelement (100) relativ zum zweiten Kupplungselement (50, 250, 350) in der Ausgangsdrehstellung und gleichzeitig die Rastelemente (42, 342; 58, 358) relativ zueinander in der Kupplungsdrehstellung stehen und in dieser der Kraftspeicher (84) die Rastelemente (42, 342; 58, 358), in der wirksamen Stellung hält.

13. Kupplung nach Anspruch 11 oder 12, dadurch gekennzeichnet, daß bei relativ zum ersten Kupplungselement (30) in aktiver Drehstellung stehendem Halteelement (100) entweder bei relativ zum zweiten Kupplungselement (50, 250, 350) in Ausgangsdrehstellung stehendem Halteelement (100) die Rastelemente (42, 342; 58, 358) außerhalb ihrer Kupplungsdrehstellung stehen und in ihrer unwirksamen Stellung verbleiben oder bei in Kupplungsdrehstellung stehenden Rastelementen (42, 342; 58, 358) das Halteelement (100) gegenüber dem zweiten Kupplungselement (50, 250, 350) außerhalb der Ausgangsstellung und in seiner aktiven Stellung steht.

14. Kupplung nach einem der Ansprüche 11 bis 13, dadurch gekennzeichnet, daß die Kupplungselemente (30, 50, 250, 350) so ausgebildet sind, daß diese außerhalb der Kupplungsdrehstellung der Rastelemente (42, 342; 58, 358) in ihrer unwirksamen Stellung gehalten werden.

15. Kupplung nach einem der Ansprüche 11 bis 14, dadurch gekennzeichnet, daß das Halteelement (100) und das zweite Kupplungselement (50, 250, 350) so ausgebildet sind, daß diese in allen Stellungen außerhalb der Ausgangsdrehstellung das Halteelement (100) in seiner aktiven Stellung halten und somit einen Übergang der Rastelemente (42, 342; 58, 358) von der unwirksamen in die wirksame Stellung verhindern.

16. Kupplung nach einem der voranstehenden Ansprüche, dadurch gekennzeichnet, daß zum Bewegen des Halteelements (100) von der inaktiven in die aktive Stellung zusammenwirkende Stellelemente (114, 414; 118, 418) vorgesehen sind.

17. Kupplung nach Anspruch 16, dadurch gekennzeichnet, daß mindestens eines der Stellelemente (114, 414; 118, 418) eine Schrägfläche (124) aufweist, gegenüber welcher das andere Stellelement bewegbar ist.

18. Kupplung nach Anspruch 16 oder 17, dadurch gekennzeichnet, daß die Stellelemente (114, 414; 118; 418) bei einer Drehbewegung des Halteelements (100) dieses in der Stellrichtung verschieben.

19. Kupplung nach einem der Ansprüche 7 bis 18, dadurch gekennzeichnet, daß an dem zweiten Kupplungselement (50, 250, 350) eines der Rastelemente (58, 258) in einem ersten Rasterbild und eines der Stellelemente (118, 418) in einem zweiten Rasterbild angeordnet sind, welches relativ zum ersten Rasterbild in einer definierten Relativstellung ausgerichtet ist, daß das andere der Rastelemente (42, 342) an dem ersten Kupplungselement (30) in dem ersten Rasterbild angeordnet und das andere der Stellelemente (114, 414) an dem Halteelement (100) in dem zweiten Rasterbild angeordnet sind, daß in der inaktiven Drehstellung des Halteelements (100) das zweite Rasterbild des Halteelements (100) zum ersten Rasterbild des ersten Kupplungselements (30) in der definierten Relativdrehstellung steht und daß in der aktiven Drehstellung des Halteelements (30) das zweite Rasterbild des Halteelements (100) gegenüber dem ersten Rasterbild des ersten Kupplungs-elements (30) aus der definierten Relativdrehstellung herausgedreht ist.

20. Kupplung nach einem der voranstehenden Ansprüche, dadurch gekennzeichnet, daß mehrere Paare von Rastelementen (42, 342; 58, 358) zwischen den Kupplungselementen (30, 50, 250, 350) wirksam sind.

21. Kupplung nach Anspruch 20, dadurch gekennzeichnet, daß diese Paare identisch ausgebildet und axialsymmetrisch zu einer Drehachse (20) der Kupplungselemente (30, 50, 250, 350) angeordnet sind.

22. Kupplung nach einem der Ansprüche 16 bis 21, dadurch gekennzeichnet, daß zwischen dem Halteelement (100) und dem zweiten Kupplungselement (50, 250, 350) mehrere Paare von Stellelementen (114, 414; 118, 418) wirksam sind.

23. Kupplung nach Anspruch 22, dadurch gekennzeichnet, daß die Paare von Stellelementen (114, 414; 118, 418) identisch ausgebildet und in einem axialsymmetrischen Muster zur Drehachse (20) angeordnet sind.

24. Kupplung nach einem der Anspruch 21 bis 23, dadurch gekennzeichnet, daß die Axialsymmetrie bei den Stellelementen (114, 414; 118, 418) dieselbe wie bei den Rastelementen (42, 342; 58, 358) ist.

25. Kupplung nach einem der voranstehenden Ansprüche, dadurch gekennzeichnet, daß das Halteelement (100) in der Ausgangsdrehstellung von dem auf die Rastelemente (42, 342; 58, 358) wirkenden elastischen Kraftspeicher (84) von der aktiven in die inaktive Stellung überführbar ist.

26. Kupplung nach einem der voranstehenden Ansprüche, dadurch gekennzeichnet, daß das Halteelement (100) erst dann von seiner inaktiven Stellung in die aktive Stellung überführbar ist, wenn die Rastelemente (42, 342; 58, 358) in ihrer unwirksamen Stellung stehen.

27. Kupplung nach Anspruch 26, dadurch gekennzeichnet, daß das Halteelement (100) bei in der unwirksamen Stellung stehenden Rastelementen (42, 342; 58, 358) von der inaktiven Stellung in die aktive Stellung frei beweglich ist.

28. Kupplung nach Anspruch 27, dadurch gekennzeichnet, daß die in der unwirksamen Stellung stehenden Rastelemente (42, 342; 58, 358) beim Übergang des Halteelements (100) von der inaktiven in die aktive Stellung die Wirkung des elastischen Kraftspeichers (84) auf das Halteelement (100) verhindern.

## Claims

1. Coupling, in particular for machine tools driven by a motor, releasable when a predetermined triggering torque occurs, comprising a coupling element (30) rotatable about an axis of rotation (20) and having at least one first locking element (42, 342), and a further coupling element (50, 250, 350) rotatable about the axis of rotation (20) and having at least one second locking element (58, 358), wherein in a coupled position the locking elements (42, 342; 58, 358) are aligned in a defined coupling rotary position relative to one another and in relation to the axis of rotation (20) and are in an operative position engaging in one another, and wherein in an uncoupled position the locking elements (42, 342; 58, 358) are disengaged in an inoperative position, an elastic force storing means (84) acting on the locking elements (42, 342; 58, 358) in the coupled position in the sense of maintaining the coupled position, and a holding element (100) movable from an inactive position into an active position once the triggering torque has occurred, characterized in that in the active position of the holding element (100) the locking elements (42, 342; 58, 358) move into the coupling rotary position and out of the coupling rotary position when the coupling is driven, that the holding element (100) in the active position prevents a transition of the locking elements (42, 342; 58, 358) from the inoperative position into the operative position in every coupling rotary position, said transition being triggered by the action of the elastic force storing means (84), and that the holding element (100) in the inactive position allows a transition of the locking elements (42, 342; 58, 358) from the inoperative position into the operative position in every coupling rotary position, said transition being triggered by the elastic force storing means (84).

2. Coupling as defined in claim 1, characterized in that once the triggering torque has occurred the holding element (100) prevents a transition of the locking elements (42, 342; 58, 358) from the inoperative position into the operative position when the respective coupling rotary position has been reached for as long as the coupling is being driven on the drive side.

3. Coupling as defined in claim 1 or 2, characterized in that the holding element (100) is adapted to be brought from the inactive into the active position by means of a relative rotational movement between the coupling elements (30; 50, 250, 350) in the uncoupled position.

4. Coupling as defined in any one of the preceding claims, characterized in that the holding element (100) is adapted to be brought from the inactive into the active position by means of a rotational movement relative to at least one of the coupling elements (30).

5. Coupling as defined in claim 4, characterized in that the holding element (100) is adapted to be brought from the inactive position into the active position by means of a relative rotational movement in relation to both coupling elements (30; 50, 250, 350).

6. Coupling as defined in any one of the preceding claims, characterized in that the holding element (100) prohibits any action of the elastic force storing means (84) on the locking elements (42, 342; 58; 358) in the sense of any movement thereof from the inactive position into the active position.

7. Coupling as defined in any one of the preceding claims, characterized in that the holding element (100) is supported in the active position on a second coupling element (50, 250, 350).

8. Coupling as defined in claim 7, characterized in that the holding element (100) is unlimitedly rotatable about the axis of rotation (20) relative to the second coupling element (50, 250, 350) supporting it in the active position.

9. Coupling as defined in claim 8, characterized in that the holding element (100) in the active position is unlimitedly rotatable relative to the second coupling element (50, 250, 350) together with a first coupling element (30).

10. Coupling as defined in claim 9, characterized in that the holding element (100) is limitedly rotatable in relation to the first coupling element (30) from a defined inactive rotary position into a defined active rotary position.

11. Coupling as defined in any one of claims 7 to 10, characterized in that the holding element (100) in its inactive rotary position relative to the first coupling element (30) has the possibility of passing into its inactive position, and that the holding element (100) and the second coupling element (50, 250, 350) are designed such that in at least one defined initial rotary position of the two relative to one another the holding element (100) is adapted to be transferred from the active into the inactive position.

12. Coupling as defined in claim 11, characterized in that in the coupled position the holding element (100) is located in the initial rotary position relative to the second coupling element (50, 250, 350) and at the same time the locking elements (42, 342; 58, 358) are located in the coupling rotary position relative to one another and in this position the force storing means (84) holds the locking elements (42, 342; 58, 358) in the operative position.

13. Coupling as defined in claim 11 or 12, characterized in that when the holding element (100) is located in an active rotary position relative to the first coupling element (30) either the locking elements (42, 342; 58, 358) are located outside their coupling rotary position and remain in their inoperative position when the holding element (100) is located in an initial rotary position relative to the second coupling element (50, 250, 350) or when the locking elements (42, 342; 58, 358) are located in a coupling rotary position the holding element (100) is located outside the initial position and in its active position relative to the second coupling element (50, 250, 350).

14. Coupling as defined in any one of claims 11 to 13, characterized in that the coupling elements (30, 50, 250, 350) are designed such that these are held in their inoperative position outside the coupling rotary position of the locking elements (42, 342; 58, 358).

15. Coupling as defined in any one of claims 11 to 14, characterized in that the holding element (100) and the second coupling element (50, 250, 350) are designed such that these hold the holding element (100) in its active position in all the positions outside the initial rotary position and thus prevent any transition of the locking elements (42, 342; 58, 358) from the inoperative into the operative position.

16. Coupling as defined in any one of the preceding claims, characterized in that interacting adjusting elements (114, 414; 118, 418) are provided for moving the holding element (100) from the inactive into the active position.

17. Coupling as defined in claim 16, characterized in that at least one of the adjusting elements (114, 414; 118, 418) has an inclined surface (124), relative to which the other adjusting element is movable.

18. Coupling as defined in claim 16 or 17, characterized in that the adjusting elements (114, 414; 118; 418) displace the holding element (100) in the adjusting direction during a rotational movement of said holding element.

19. Coupling as defined in any one of claims 7 to 18, characterized in that one of the locking elements (58, 258) is arranged on the second coupling element (50, 250, 350) in a first pattern and one of the adjusting elements (118, 418) in a second pattern aligned in a defined relative position in relation to the first pattern, that the other one of the locking elements (42, 342) is arranged on the first coupling element (30) in the first pattern and the other one of the adjusting elements (114, 414) on the holding element (100) in the second pattern, that in the inactive rotary position of the holding element (100) the second pattern of the holding element (100) is located in the defined relative rotary position in relation to the first pattern of the first coupling element (30), and that in the active rotary position of the holding element (30) the second pattern of the holding element (100) is rotated out of the defined relative rotary position in relation to the first pattern of the first coupling element (30).

20. Coupling as defined in any one of the preceding claims, characterized in that several pairs of locking elements (42, 342; 58, 358) are operative between the coupling elements (30, 50, 250, 350).

21. Coupling as defined in claim 20, characterized in that these pairs are of an identical design and arranged in axial symmetry in relation to an axis of rotation (20) of the coupling elements (30, 50, 250, 350).

22. Coupling as defined in any one of claims 16 to 21, characterized in that several pairs of adjusting elements (114, 414; 118, 418) are operative between the holding element (100) and the second coupling element (50, 250, 350).

23. Coupling as defined in claim 22, characterized in that the pairs of adjusting elements (114, 414; 118, 418) are of an identical design and arranged in an axially symmetrical pattern in relation to the axis of rotation (20).

24. Coupling as defined in any one of claims 21 to 23, characterized in that the axial symmetry in the case of the adjusting elements (114, 414; 118, 418) is the same as in the case of the locking elements (42, 342; 58, 358).

25. Coupling as defined in any one of the preceding claims, characterized in that in the initial rotary position the holding element (100) is adapted to be transferred from the active into the inactive position by the elastic force storing means (84) acting on the locking elements (42, 324; 58, 358).

26. Coupling as defined in any one of the preceding claims, characterized in that the holding element (100) is adapted to be transferred from its inactive position into the active position only when the locking elements (42, 342; 58, 358) are in their inoperative position.

27. Coupling as defined in claim 26, characterized in that the holding element (100) is freely movable from the inactive position into the active position when the locking elements (42, 342; 58, 358) are in the inoperative position.

28. Coupling as defined in claim 27, characterized in that the locking elements (42, 342; 58, 358) in the inoperative position prevent the elastic force storing means (84) from acting on the holding element (100) during the transition of the holding element (100) from the inactive into the active position.

## Revendications

1. Embrayage, en particulier pour machines-outils entraînés par moteur, qui peut être débrayé lors de l'apparition d'un couple de déclenchement déterminé, et qui comprend : un élément d'embrayage (30) qui peut tourner autour d'un axe de rotation (20) et qui possède au moins un premier élément de verrouillage (42, 342) et un autre élément d'embrayage (50, 250, 350) qui peut tourner autour de l'axe de rotation (20) et qui possède au moins un deuxième élément de verrouillage (58, 358), les éléments de verrouillage ((42, 342 ; 58, 358) étant orientés dans une position angulaire d'embrayage définie, l'un par rapport à l'autre et relativement à l'axe de rotation (20) et se trouvant dans une position efficace, en prise entre eux, dans une position embrayée, tandis que, dans une position débrayée, les éléments de verrouillage (42, 342 ; 58, 358) sont hors de prise, dans une position inefficace ; un accumulateur de force élastique (84) qui, dans la position embrayée, agit sur les éléments de verrouillage (42, 342 ; 58, 358) dans le sens du maintien de la position embrayée ; et un élément de retenue (100) qui, après l'apparition du couple de déclenchement, peut être amené d'une position inactive à une position active,
caractérisé en ce que, dans la position active de l'élément de retenue (100), alors que l'embrayage est entraîné, les éléments de verrouillage (42, 542 ; 58, 358) sont amenés dans la position angulaire d'embrayage et écartés de cette position, en ce que, dans la position active, l'élément de retenue (100), dans chaque position angulaire d'embrayage, empêche un passage des éléments de verrouillage (42, 342 ; 58, 358) de la position inactive à la position active déclenché par l'action de l'accumulateur de force élastique (84), et en ce que, dans la position inactive, l'élément de retenue (100), dans chaque position angulaire d'embrayage, admet un passage des éléments de verrouillage (42, 342 ; 58, 358) de la position inefficace à la position efficace déclenché par l'accumulateur de force élastique (84).

2. Embrayage selon la revendication 1, caractérisé en ce qu'après l'apparition du couple de déclenchement, l'élément de retenue (100) empêche, lorsqu'on a atteint la position angulaire d'embrayage, un passage des éléments de verrouillage (42, 342 ; 58, 358) de la position inefficace à la position efficace aussi longtemps que l'embrayage est entraîné sur son côté d'entrée.

3. Embrayage selon la revendication 1 ou 2, caractérisé en ce que l'élément de retenue (100) peut être amené de la position inactive à la position active par un mouvement de rotation relatif entre les éléments (30 ; 50, 250, 350) de l'embrayage dans la position débrayée.

4. Embrayage selon une des revendications précédentes, caractérisé en ce que l'élément de retenue (100) peut être amené de la position inactive à la position active par un mouvement de rotation par rapport à au moins un des éléments (30) de l'embrayage.

5. Embrayage selon la revendication 4, caractérisé en ce que l'élément de retenue (100) peut être amené de la position inactive à la position active par un mouvement de rotation relative par rapport aux deux éléments (30 ; 50, 250, 350) de l'embrayage.

6. Embrayage selon une des revendications précédentes, caractérisé en ce que l'élément de retenue (100) interdit l'action de l'accumulateur de force élastique (84) sur les éléments de verrouillage (42, 342 ; 58, 358) dans le sens d'un déplacement de ces derniers de la position inefficace à la position efficace.

7. Embrayage selon une des revendications précédentes, caractérisé en ce que l'élément de retenue (100) prend appui sur un deuxième élément (50, 250, 350) de l'embrayage dans la position active.

8. Embrayage selon la revendication 7, caractérisé en ce que l'élément de retenue (100) peut tourner sans limitation autour de l'axe de rotation (20) par rapport au deuxième élément (50, 250, 350) de l'embrayage qui lui donne appui dans la position active.

9. Embrayage selon la revendication 8, caractérisé en ce que l'élément de retenue (100) peut tourner sans limitation par rapport au deuxième élément (50, 250, 350) de l'embrayage dans la position active, conjointement avec le premier élément (30) de l'embrayage.

10. Embrayage selon la revendication 9, caractérisé en ce que l'élément de retenue (100) peut tourner sans limitation par rapport au premier élément (30) de l'embrayage, d'une position angulaire inactive définie à une position angulaire active définie.

11. Embrayage selon une des revendications 7 à 10, caractérisé en ce que, dans sa position angulaire inactive, relativement au premier élément (30) de l'embrayage, l'élément de retenue (100) a la possibilité de passer à sa position inactive et en ce que l'élément de retenue (100) et le deuxième élément (50, 250, 350) de l'embrayage sont configurés de manière que, dans au moins une position angulaire de départ définie des deux l'un par rapport à l'autre, l'élément de retenue (100) peut être amené de la position active à la position inactive.

12. Embrayage selon la revendication 11, caractérisé en ce que, dans la position embrayée, l'élément de retenue (100) se trouve dans la position angulaire de départ par rapport au deuxième élément (50, 250, 350) de l'embrayage et, en même temps, les éléments de verrouillage (42, 342 ; 58, 358) sont dans la position angulaire d'embrayage l'un par rapport à l'autre et, dans cette position, l'accumulateur de force (84) maintient les éléments de verrouillage (42, 342 ; 58, 358) dans la position efficace.

13. Embrayage selon la revendication 11 ou 12, caractérisé en ce que lorsque l'élément de retenue (100) est en position angulaire active par rapport au premier élément (30) de l'embrayage, soit lorsque l'élément de retenue (100) se trouve dans la position angulaire de départ par rapport au deuxième élément (50, 250, 350) de l'embrayage, les éléments de verrouillage (100) se trouvent en dehors de leur position angulaire d'embrayage et restent dans leur position inefficace, soit lorsque les éléments de verrouillage (42, 342 ; 58, 358) se trouvent dans la position angulaire d'embrayage, l'élément de retenue (100) est en dehors de la position de départ par rapport au deuxième élément (50, 250, 350) de l'embrayage et dans sa position active.

14. Embrayage selon une des revendications 11 à 13, caractérisé en ce que les éléments (30, 50, 250, 350) de l'embrayage sont configurés de manière qu'en dehors de la position angulaire d'embrayage des éléments de verrouillage (42, 342 ; 58, 358), ces éléments de verrouillage sont maintenus dans leur position inefficace.

15. Embrayage selon une des revendications 11 à 14, caractérisé en ce que l'élément de retenue (100) et le deuxième élément (50, 250, 350) de l'embrayage sont configurés de manière que, dans toutes les positions en dehors de la position angulaire de départ, ces éléments maintiennent l'élément de retenue (100) dans sa position active et empêchent ainsi un passage des éléments de verrouillage (42, 342 ; 58, 358) de la position inefficace à la position efficace.

16. Embrayage selon une des revendications précédentes, caractérisé en ce que pour déplacer l'élément de retenue (100) de la position inactive à la position active, il est prévu des éléments de commande (114, 414 ; 118, 418) qui coopèrent entre eux.

17. Embrayage selon la revendication 16, caractérisé en ce qu'au moins un des éléments de commande (114, 414 ; 118, 418) présente une surface inclinée (124) par rapport à laquelle l'autre élément de commande peut se déplacer.

18. Embrayage selon la revendication 16 ou 17, caractérisé en ce qu'en présence d'un mouvement de rotation de l'élément de retenue (100), les éléments de commande (114, 414 ; 118, 418) déplacent cet élément de retenue dans la direction de commande.

19. Embrayage selon une des revendications 7 à 18, caractérisé en ce que, sur le deuxième élément (50, 250, 350) de l'embrayage, un des éléments de verrouillage (58, 258) est disposé dans une première figure de grille et un des éléments de commande (118, 418) est disposé dans une deuxième figure de grille qui est alignée dans une position relative définie par rapport à la première figure de grille, en ce que l'autre des éléments de verrouillage (42, 342) portés par le premier élément (30) de l'embrayage est disposé dans la première figure de grille et l'autre des éléments de commande (114, 414) portés par l'élément de retenue (100) est disposé dans la deuxième figure de grille, en ce que, dans la position angulaire inactive de l'élément de retenue (100), la deuxième figure de grille de l'élément de retenue (100) se trouve dans une position angulaire relative définie par rapport à la première figure de grille du premier élément (30) de l'embrayage et en ce que, dans la position angulaire active de l'élément de retenue (30), la deuxième figure de grille de l'élément de retenue (100) est éloignée par rotation de la position angulaire relative définie par rapport à la première figure de grille du premier élément (30) de l'embrayage.

20. Embrayage selon une des revendications précédentes, caractérisé en ce que plusieurs paires d'élément de verrouillage (42, 342 ; 58, 358) sont efficaces entre les éléments (30, 50, 250, 350) de l'embrayage.

21. Embrayage selon la revendication 20, caractérisé en ce que ces paires sont de configuration identique et sont disposées avec symétrie axiale par rapport à un axe de rotation (20) des éléments (30, 50, 250, 350) de l'embrayage.

22. Embrayage selon une des revendications 16 à 21, caractérisé en ce que plusieurs paires d'éléments de commande (114, 414 ; 118, 418) sont efficaces entre l'élément de retenue (100) et le deuxième élément (50, 250, 350) de l'embrayage.

23. Embrayage selon la revendication 22, caractérisé en ce que les paires d'éléments de commande (114, 414 ; 118, 418) sont de configuration identique et sont disposées dans un motif possédant une symétrie axiale par rapport à l'axe de rotation (20).

24. Embrayage selon une des revendications 21 à 23, caractérisé en ce que la symétrie axiale est la même pour les éléments de commande (114, 414 ; 118, 418) que pour les éléments de verrouillage (42, 342 ; 58, 358).

25. Embrayage selon une des revendications précédentes, caractérisé en ce que, dans la position angulaire de départ, l'élément de retenue (100) peut être transféré de la position active à la position inactive par l'accumulateur de force élastique (84) qui agit sur les éléments de verrouillage (42, 342 ; 58, 358).

26. Embrayage selon une des revendications précédentes, caractérisé en ce que l'élément de retenue (100) ne peut être transféré de sa position inactive à la position active que lorsque les éléments de verrouillage (42, 342 ; 58, 358) se trouvent dans leur position inefficace.

27. Embrayage selon la revendication 26, caractérisé en ce que lorsque les éléments de verrouillage (42, 342 ; 58, 358) se trouvent dans la position inefficace, l'élément de retenue (100) peut passer librement de la position inactive à la position active.

28. Embrayage selon la revendication 27, caractérisé en ce que les éléments de verrouillage (42, 342 ; 58, 358) lorsqu'ils se trouvent dans la position inefficace interdisent l'action de l'accumulateur de force élastique (84) sur l'élément de retenue (100) lors du passage de l'élément de retenue (100) de la position inactive à la position active.
